(19) **Europäisches Patentamt / European Patent Office / Office européen des brevets**

(11) **EP 3 764 646 A1**

(12) **EUROPEAN PATENT APPLICATION**
published in accordance with Art. 153(4) EPC

(43) Date of publication:
**13.01.2021 Bulletin 2021/02**

(51) Int Cl.:
**H04N 19/117** (2014.01)   **H04N 19/82** (2014.01)

(21) Application number: **19771991.7**

(22) Date of filing: **18.03.2019**

(86) International application number:
**PCT/CN2019/078559**

(87) International publication number:
**WO 2019/179401 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2018   CN 201810226373**

(71) Applicant: **HUAWEI TECHNOLOGIES CO., LTD.**
**Shenzhen, Guangdong 518129 (CN)**

(72) Inventors:
• **LU, Xiaomu**
  **Shenzhen, Guangdong 518129 (CN)**
• **CHEN, Jianle**
  **Shenzhen, Guangdong 518129 (CN)**
• **GAO, Shan**
  **Shenzhen, Guangdong 518129 (CN)**
• **YANG, Haitao**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **IMAGE FILTERING METHOD AND APPARATUS, AND VIDEO CODEC**

(57)   Embodiments of this application disclose a picture filtering method and apparatus, and a video codec, relate to the field of video coding technologies, and may be applied to, for example, but is not limited to, a deblocking filtering scenario, to help improve video coding performance. The picture filtering method may include: determining, based on dimension information of a to-be-filtered current picture block, a target filter used to filter the current picture block, where the dimension information of the current picture block includes the width or height of the current picture block; and performing filtering processing on the current picture block by using a target filter. The technical solutions disclosed in the embodiments of this application are applicable to a next-generation video coding technology.

Encode a syntax element related to a to-be-filtered current picture block into a stream, where the syntax element related to the current picture block may include picture filtering data, and the picture filtering data includes an identifier used to indicate whether to perform filtering processing based on dimension information of the current picture block  —  S501

If the identifier is used to indicate to perform filtering processing on the current picture block based on the dimension information of the current picture block, perform filtering processing on the current picture block based on the dimension information of the current picture block  —  S503

FIG. 5

**Description**

This application claims priority to Chinese Patent Application No. 201810226373.9, filed with the Chinese Patent Office on March 19, 2018 and entitled "PICTURE FILTERING METHOD AND APPARATUS, AND VIDEO CODEC", which is incorporated herein by reference in its entirety.

**TECHNICAL FIELD**

This application relates to the field of video coding technologies, and in particular, to a picture filtering method and apparatus, and a corresponding video codec.

**BACKGROUND**

To reduce transmission overheads, before transmitting a video picture, a video encoder needs to perform compress coding (referred to as video coding below) on the video picture. Currently, a common video coding technology is a block-based video coding technology. Specifically, a video encoder first partitions a frame of raw picture into a plurality of parts that do not overlap each other, and each part may be used as one picture block. Then, operations such as prediction, transformation, and quantization are performed on each picture block, to obtain a stream corresponding to the picture block. The prediction is to obtain a prediction block of a picture block, so that only a difference (or referred to as a residual or a residual block) between the picture block and the prediction block may be encoded and transmitted, thereby reducing transmission overheads. Subsequently, the video encoder may send the stream corresponding to the picture block to a video decoder. After receiving the stream, the video decoder performs a video decoding process. Specifically, operations such as prediction, inverse quantization, and inverse transformation are performed on the stream to obtain a reconstructed picture block (or referred to as a reconstructed block of the picture block). This process is referred to as a picture reconstruction process (or a picture rebuilding process). Then, the video encoder may assemble reconstructed blocks of all picture blocks in the raw picture to obtain a reconstructed picture of the raw picture, and play the reconstructed picture.

Based on the foregoing method, in a process in which the video encoder encodes a video, if different quantization parameters are used for two neighboring picture blocks, or a same quantization parameter but an excessively large quantization step is used for two neighboring picture blocks, or the like, discontinuous samples (or pixels) of reconstructed blocks of two picture blocks may be generated at a boundary between the two picture blocks, where the two picture blocks are obtained by the video decoder by reconstructing a picture. If the picture at the boundary is flat, obvious visible blocking artifacts (blocking artifact) may occur at the boundary at a low bit rate. This affects coding performance. In view of this, after obtaining a frame of reconstructed picture and before playing the reconstructed picture, the video decoder usually performs filtering processing, for example, deblocking filtering processing, on the reconstructed picture. It may be understood that the video encoder also needs to perform a picture reconstruction process, to obtain a reconstructed picture block. The reconstructed picture block may be used to determine a prediction block of another picture block. Therefore, after obtaining the frame of reconstructed picture, the video encoder also performs filtering processing, for example, deblocking filtering processing, on the reconstructed picture.

However, currently, there is no effective filtering processing method applicable to a next-generation video coding technology, for example, a deblocking filtering method.

**SUMMARY**

Embodiments of this application provide a picture filtering method and apparatus, and a corresponding video codec. The picture filtering method and apparatus, and the corresponding video codec may be applied to, for example, but not limited to, a deblocking filtering scenario, to help improve video coding performance. The technical solutions are applicable to a next-generation video coding technology.

According to a first aspect, an embodiment of this application provides a picture filtering method, applied to a picture filtering apparatus. The method may include: determining, based on dimension information (size) of a to-be-filtered current picture block, a target filter used to filter the current picture block; and performing filtering processing on the current picture block by using the target filter. The dimension information of the current picture block may also be referred to as a block dimension or a block size of the current picture block. In this application, the terms have a same meaning and may be used interchangeably. The dimension information of the current picture block may be one-dimensional dimension information of the current picture block may include, for example, but is not limited to, the height (height) or width (width) of the current picture block. Optionally, the height and width of the current picture block may or may not be equal. In this application, a dimension of a picture block in a horizontal direction is the width of the picture block, and a dimension of a picture block in a vertical direction is the height of the picture block.

It can be learned that, properly setting an association relationship between the dimension information of the current picture block and a target filter used to filter the current picture block helps improve filtering performance of filtering the current picture block, thereby improving video coding performance. Compared with the H.265 standard, in a next-generation video coding technology, a size range of a picture block defined (or temporarily defined) may be larger. For example, a size range of a coding unit (coding unit, CU) may be extended to 4x4 (that is, including four rows and four columns of pixels) and 256x256 (that is, 256 rows and 256 columns of pixels), or may be a rectangle whose length and width are not equal. Therefore, this embodiment of this application provides a technical solution of determining, based on the dimension information of the current picture block, a target filter used to filter the current picture block, and in particular, is applicable to a next-generation video coding technology.

It should be understood that the current picture block (a current block for short) herein may be understood as a reconstructed picture block (reconstructed block), for example, a reconstructed pixel array or a reconstructed sample array. For example, in a video encoding process, the current picture block may be specifically a reconstructed block of a picture block (encoding block) that is currently being encoded. In a video decoding process, the current picture block may be specifically a reconstructed block of a picture block (decoding block) that is currently being decoded. Optionally, the to-be-filtered current picture block may be a current picture block on which deblocking filtering is to be performed. In this case, the target filter used to filter the current picture block may be specifically a target filter used to perform deblocking filtering on the current picture block on which deblocking filtering is to be performed. Certainly, this application is not limited thereto.

It should be understood that the method in this embodiment of this application may be performed by the picture filtering apparatus, for example, a video encoder, a video decoder, or an electronic device having a video coding function, to be specific, for example, a filter in the video encoder or a filter in the video decoder.

It should be understood that different filters may be understood as different filtering solutions, or may be understood as a functional module that implements a filtering solution. The filter may be implemented by using software, or may be implemented by using hardware, or may be implemented by using software in combination with hardware. Attributes of the filter may include, for example, but is not limited to, at least one of the following: a filtering algorithm, a filtering coefficient, a quantity of source filtering pixels, and a quantity of target filtering pixels. The quantity of source filtering pixels is a pixel used for filtering. The target filtering pixel is an actually filtered pixel. It may be understood that, in different designs, any one or more attributes of the filter may be associated with a dimension of the picture block, or may be fixed. For example, the quantity of source filtering pixels is associated with a block dimension of a picture block. For example, a larger block dimension indicates a larger quantity of source filtering pixels. For example, the quantity of target filtering pixels is associated with a block dimension of a picture block. For example, a larger block dimension indicates a larger quantity of target filtering pixels.

In a possible design, the determining, based on dimension information of a to-be-filtered current picture block, a target filter used to filter the current picture block may include: when it is determined that the current picture block needs to be filtered, determining, based on the dimension information of the to-be-filtered current picture block, a target filter used to filter the current picture block, for example, determining a target filter used to perform deblocking filtering on the current picture block. For a method for determining whether the current picture block needs to be filtered, refer to the prior art. Certainly, this application is not limited thereto.

In a possible design, the determining, based on dimension information of a to-be-filtered current picture block, a target filter used to filter the current picture block may include: determining, from a filter set based on the dimension information of the to-be-filtered current picture block, the target filter used to filter the current picture block. The filter set may include at least two filters or at least two types of filters.

It can be learned that, in this embodiment of this application, a proper filter may be selected from a plurality of types of filters or a plurality of filters based on the width or height of a picture block, for example, deblocking filtering.

In a possible design, the determining, based on dimension information of a to-be-filtered current picture block, a target filter used to filter the current picture block may include: determining, based on the dimension information of the current picture block, the target filter used to filter the current picture block at a boundary, for example, determining, from a filter set based on the dimension information of the current picture block, a target filter used to filter the current picture block at a boundary. In this case, the performing filtering processing on the current picture block by using a target filter may include: performing filtering processing on filtering pixels (for example, filtering pixels neighboring the boundary) in the current picture block by using the target filter.

The boundary is a boundary between the current picture block and a neighboring picture block of the current picture block. The boundary is perpendicular to a height direction of the current picture block, or the boundary is perpendicular to a width direction of the current picture block. Specifically, the boundary may be a vertical boundary and/or a horizontal boundary. Optionally, the filtering pixels neighboring the boundary may also be referred to as filtering pixels close to the boundary, and may include filtering pixels directly adjacent to the boundary and/or filtering pixels indirectly adjacent to the boundary.

Specifically, the determining, based on the dimension information of the current picture block, the target filter used to filter the current picture block at a boundary may include: determining, based on a block dimension (which may be, for example, the height or width of the current picture block) of the current picture block in a horizontal direction, a target filter used to filter the current picture block at a vertical boundary; and/or determining, based on a block dimension (which may be, for example, the width or height of the current picture block) of the current picture block in a vertical direction, a target filter used to filter the current picture block at a horizontal boundary.

It can be learned that this embodiment of this application may support a boundary-based filtering solution.

In a possible design, the performing, by using the target filter, filtering processing on filtering pixels in the current picture block that neighbor to the boundary may include: performing, by using the target filter, filtering processing on filtering pixels in the current picture block that neighbor to the boundary, and performing filtering processing on filtering pixels in the neighboring picture block that neighbor to the boundary.

It can be learned that this embodiment of this application supports a solution in which filtering processing is performed by using a same filter on filtering pixels, neighboring the boundary, in picture blocks on two sides of a boundary. This possible design may be applied to a scenario in which dimensions, perpendicular to the boundary, of picture blocks on two sides of a boundary are equal or basically consistent.

In a possible design, the method may further include: determining, based on dimension information of the neighboring picture block, a second target filter used to filter the neighboring picture block at the boundary, for example, determining, from the filter set to which the target filter belongs, the second target filter used to filter the neighboring picture block at the boundary. In this case, the performing, by using the target filter, filtering processing on filtering pixels in the current picture block that neighbor to the boundary may include: performing, by using the target filter, filtering processing on the filtering pixels in the current picture block that neighbor to the boundary; and performing, by using the second target filter, filtering processing on filtering pixels in the neighboring picture block that neighbor to the boundary. Filtering strength of the target filter is different from filtering strength of the second target filter.

The filtering strength of the filter is related to any one or more attributes of the filter. In other words, the any one or more attributes of the filter may affect the filtering strength of the filter. For example, a larger quantity of source filtering pixels in attributes of the filter indicates higher filtering strength of the filter. For another example, a larger quantity of target filtering pixels in attributes of the filter indicates higher filtering strength of the filter. For still another example, when another attribute is specified, if filtering algorithms (for example, a Gaussian filtering algorithm and a Wiener filtering algorithm) are different, the filters also have different filtering strength.

It can be learned that this embodiment of this application supports a solution in which filtering is performed by using different filters on filtering pixels, neighboring a boundary, in picture blocks on two sides of the boundary.

In a possible design, the determining, based on dimension information of a to-be-filtered current picture block, a target filter used to filter the current picture block may include: determining, based on the block dimension of the current picture block through table lookup or a comparison with a threshold, a target filter used to filter the current picture block at the boundary. For example, the target filter used to filter the current picture block at the boundary is determined from the filter set based on the block dimension of the current picture block through table lookup or a comparison with a threshold.

In a possible design, the determining, based on dimension information of a to-be-filtered current picture block, a target filter used to filter the current picture block may include: when a block dimension of the to-be-filtered current picture block is greater than a preset value, determining, based on the dimension information of the current picture block, the target filter used to filter the current picture block.

It can be learned that this embodiment of this application helps avoid a logical contradiction with a CU size defined in a next-generation video coding technology. For example, because a minimum CU size defined (or temporarily defined) in the next-generation video coding technology is 4x4, if the preset value is equal to 4, a conflict with the next-generation video coding technology can be avoided.

In a possible design, the neighboring picture block of the current picture block includes a third neighboring picture block and a fourth neighboring picture block, and the boundary includes a third boundary between the current picture block and the third neighboring picture block and a fourth boundary between the current picture block and the fourth neighboring picture block, where the third boundary is a vertical boundary, and the fourth boundary is a horizontal boundary. In this case, the performing, by using the target filter, filtering processing on filtering pixels in the current picture block that neighbor to the boundary may include: determining, from the filter set based on the width of the current picture block through table lookup or a comparison with a threshold, a target filter used to filter the current picture block at the third boundary, where the width of the current picture block is greater than or equal to a preset value; and determining, from the filter set based on the height of the current picture block through table lookup or a comparison with a threshold, a target filter used to filter the current picture block at the fourth boundary, where the height of the current picture block is greater than or equal to the preset value.

In a possible design, the determining, from a filter set based on the dimension information of the current picture block, a target filter used to filter the current picture block at a boundary may include any one of the following implementations 1 to 3.

In the following, the implementation 1 may be considered as, but not limited to, a solution of determining the target filter through table lookup; and the implementations 2 and 3 may be considered as specific implementations of determining the target filter through a comparison with a threshold.

Implementation 1: Determine, based on a correspondence between a plurality of block dimensions (for example, a one-dimensional block dimension) and a plurality of filters in the filter set, a filter corresponding to a block dimension of the current picture block, where the filter corresponding to the block dimension of the current picture block is the target filter used to filter the current picture block at the boundary; and the correspondence between the plurality of block dimensions and the plurality of filters in the filter set may be represented as, for example, but is not limited to, a table or a formula.

The implementation 1 may include: determining, based on a correspondence between a plurality of block widths and a plurality of filters in the filter set, a filter corresponding to the width of the current picture block, where the filter corresponding to the width of the current picture block is a target filter used to filter the current picture block at a vertical boundary; or determining, based on a correspondence between a plurality of block heights and a plurality of filters in the filter set, a filter corresponding to the height of the current picture block, where the filter corresponding to the height of the current picture block is a target filter used to filter the current picture block at a horizontal boundary.

Implementation 2: If a block dimension of the current picture block is greater than or equal to a first threshold, determine that a first filter in the filter set is the target filter used to filter the current picture block at the boundary; or if a block dimension of the current picture block is less than a first threshold, determine that a second filter in the filter set is the target filter used to filter the current picture block at the boundary. Filtering strength of the first filter is greater than filtering strength of the second filter.

The implementation 2 may include: if the width of the current picture block is greater than or equal to the first threshold, determining that the first filter in the filter set is a target filter used to filter the current picture block at a vertical boundary; or if the height of the current picture block is less than a first threshold, determining that the second filter in the filter set is a target filter used to filter the current picture block at a horizontal boundary. Filtering strength of the first filter is greater than filtering strength of the second filter.

It should be understood that, for specific implementation of other implementations, refer to specific implementation of the implementations 1 and 2. Details are not described in this specification.

Implementation 3: If a block dimension of the current picture block is greater than or equal to a first threshold, determine that a first filter in the filter set is the target filter used to filter the current picture block at the boundary; if a block dimension of the current picture block is less than a second threshold, determine that a second filter in the filter set is the target filter used to filter the current picture block at the boundary; or if a block dimension of the current picture block is less than a first threshold and greater than or equal to a second threshold, determine that a third filter in the filter set is the target filter used to filter the current picture block at the boundary, where the first threshold is greater than the second threshold, filtering strength of the first filter is greater than filtering strength of the second filter, filtering strength of the third filter is less than the filtering strength of the first filter and greater than the filtering strength of the second filter, and the block dimension of the current picture block is the width or height of the current picture block.

In a possible design, the determining, from a filter set based on the dimension information of the current picture block, the target filter used to filter the current picture block at a boundary may include: determining, from the filter set based on the dimension information of the current picture block and a result of predetermining filtering strength of the boundary by the picture filtering apparatus, the target filter used to filter the current picture block at the boundary.

In this way, filtering efficiency can be improved, thereby improving video coding performance. For example, the result of predetermining the filtering strength of the boundary by the picture filtering apparatus may be "strong filtering" or "weak filtering" defined in the H.265 standard or the H.264 standard. It can be learned that this embodiment of this application may be compatible with the prior art. Certainly, this application is not limited thereto.

In a possible design, the neighboring picture blocks of the current picture block may include a first neighboring picture block and a second neighboring picture block, and the boundary includes a first boundary between the current picture block and the first neighboring picture block and a second boundary between the current picture block and the second neighboring picture block. In this case, the determining, from the filter set based on the dimension information of the current picture block and a result of predetermining filtering strength of the boundary by the picture filtering apparatus, the target filter used to filter the current picture block at the boundary may include: determining, from the filter set based on the dimension information of the current picture block and a first result of predetermining filtering strength of the first boundary by the picture filtering apparatus, a third target filter used to filter the current picture block at the first boundary; and determining, from the filter set based on the dimension information of the current picture block and a second result of predetermining filtering strength of the second boundary by the picture filtering apparatus, a fourth target filter used to filter the current picture block at the second boundary.

Both the first boundary and the second boundary are vertical boundaries, and a sum of a quantity of target filtering pixels that is included in attributes of the third target filter and a quantity of target filtering pixels that is included in attributes of the fourth target filter is less than or equal to the width of the current picture block; or both the first boundary and the second boundary are horizontal boundaries, and a sum of a quantity of target filtering pixels that is included in attributes of the third target filter and a quantity of target filtering pixels that is included in attributes of the fourth target filter is less than or equal to the height of the current picture block. In this way, it can be ensured that each pixel in the current picture block is filtered a maximum of once, so that repeated filtering can be avoided, thereby reducing calculation complexity.

In a possible design, the determining, from the filter set based on the dimension information of the current picture block and a result of predetermining filtering strength of the boundary by the picture filtering apparatus, the target filter used to filter the current picture block at the boundary may include any one of the following implementations 4 to 9.

In the following, the implementations 4 and 5 may be considered as, but not limited to, a solution of determining the target filter through table lookup. Specifically, the implementation 4 may be considered that the table is first looked up based on the block dimension, and then the target filter is determined based on the predetermining result of the filtering strength of the boundary. The implementation 5 may be considered as that the target filter is determined first based on the result of predetermining the filtering strength and then through table lookup based on the block dimension. The following implementations 6 to 9 may be considered as a specific implementation of determining the target filter through a comparison with a threshold. Specifically, the implementations 6 and 7 may be considered as that a comparison with the threshold is performed based on the block dimension, and then the target filter is determined based on a result of predetermining filtering strength of the boundary. The implementations 8 and 9 may be considered as that the target filter is determined first based on the result of predetermining the filtering strength and then through a comparison with a threshold based on the block dimension.

Implementation 4: Determine, based on a correspondence between a plurality of block dimensions and a plurality of filters in a first filter set, filter corresponding to a block dimension of the current picture block. The filter corresponding to the block dimension of the current picture block is the target filter used to filter the current picture block at the boundary, and the first filter set is a filter set that corresponds to the predetermining result of the filtering strength of the boundary in a plurality of filter sets.

Implementation 5: Determine, based on a correspondence between a plurality of block dimensions and a plurality of filter sets, a second filter set corresponding to a block dimension of the current picture block, where the second filter set includes a plurality of filters corresponding to different filtering strength; and determine, from the second filter set, a filter corresponding to the predetermining result of the filtering strength of the boundary, where the filter corresponding to the predetermining result of the filtering strength of the boundary is the target filter used to filter the current picture block at the boundary.

Implementation 6: If a block dimension of the current picture block is greater than or equal to a third threshold, determine that a fourth filter in a third filter set is the target filter used to filter the current picture block at the boundary; or if a block dimension of the current picture block is less than a third threshold, determine that a fifth filter in the third filter set is the target filter used to filter the current picture block at the boundary. Filtering strength of the fourth filter is greater than filtering strength of the fifth filter, and the third filter set is a filter set that corresponds to the predetermining result of the filtering strength of the boundary in a plurality of filter sets.

Implementation 7: If a block dimension of the current picture block is greater than or equal to a third threshold, determine that a fourth filter in a third filter set is the target filter used to filter the current picture block at the boundary; and if the block dimension of the current picture block is less than a fourth threshold, determine that a fifth filter in the third filter set is the target filter used to filter the current picture block at the boundary; or if a block dimension of the current picture block is less than a third threshold and greater than or equal to a fourth threshold, determine that a sixth filter in the third filter set is the target filter used to filter the current picture block at the boundary. The third threshold is greater than the fourth threshold, filtering strength of the fourth filter is greater than filtering strength of the fifth filter, filtering strength of the sixth filter is less than the filtering strength of the fourth filter and greater than the filtering strength of the fifth filter, and the third filter set is a filter set in the plurality of filter sets that corresponds to the predetermining result of the filtering strength of the boundary.

Implementation 8: If a block dimension of the current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; or if a block dimension of the current picture block is less than a fifth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary. Filtering strength of the target filter in the fourth filter set is greater than filtering strength of the target filter in the fifth filter set.

Implementation 9: If a block dimension of the to-be-filtered current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; and if the block dimension of the to-be-filtered current picture block is less than a sixth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary; or if a block dimension of the to-be-filtered current picture block is less than a fifth threshold and greater than or equal to a sixth threshold, determine that a filter set corresponding to the block dimension of the current picture block is a sixth filter set, where the sixth filter set includes a plurality of filters corresponding to different filtering strength; and determine, the sixth filter set, a filter corresponding to the predetermining result of the filtering strength of the boundary, where the filter corresponding to the predetermining result of the filtering strength of the boundary is the target filter used to filter the current picture block at the boundary. The fifth threshold is greater than the sixth threshold, filtering strength of the target filter in the fourth filter set is greater than filtering strength of the target filter in the fifth filter set, filtering strength of the target filter in the sixth filter set is less than the filtering strength of the target filter in the fourth filter set and greater than the filtering strength of the target filter in the fifth filter set.

In a possible design, the performing, by using the target filter, filtering processing on filtering pixels in the current picture block that neighbor to the boundary may include:

if attributes of the target filter include a filtering coefficient, a quantity of source filtering pixels, and a quantity of target filtering pixels, performing filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels;

if attributes of the target filter include a filtering coefficient and a quantity of source filtering pixels, performing filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to the quantity of source filtering pixels;

if attributes of the target filter include a filtering coefficient and a quantity of target filtering pixels, performing filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels;

if attributes of the target filter include a filtering coefficient, performing filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to a preset quantity of source filtering pixels;

if attributes of the target filter include a quantity of source filtering pixels and a quantity of target filtering pixels, performing filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels;

if attributes of the target filter include a quantity of source filtering pixels, performing filtering processing on filtering pixels in the current picture block based on a preset filtering coefficient and filtering pixels on two sides of the boundary, where the pixels in the current picture block neighbor to the boundary and correspond to a preset quantity of target filtering pixels, and the filtering pixels on the two sides of the boundary correspond to the quantity of source filtering pixels; or

if attributes of the target filter include a quantity of target filtering pixels, performing filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels.

Filtering pixels corresponding to the quantity of source filtering pixels are source filtering pixels. For example, the source filtering pixels may be some or all of a row/column of pixels perpendicular to the boundary. Filtering pixels corresponding to the quantity of target filtering pixels are target filtering pixels. Pixels obtained after filtering processing may be referred to as filtered pixels, and the target filtering pixels one-to-one correspond to the filtered pixels. The preset attributes (for example, a preset source sampling filtering pixel, a preset target filtering pixel, or the preset filtering coefficient) may be understood as a preset and fixed attribute that does not vary with a selected filter. The preset filtering coefficient may be understood as a preset filtering coefficient determining algorithm or the like.

It can be learned that, in this embodiment of this application, one or more attributes of the filter are associated with the block dimension of the current picture block. Optionally, a fixed solution is used for other attributes.

According to a second aspect, an embodiment of this application provides a picture filtering method, including: if a block dimension of a current picture block is greater than or equal to a first threshold, determining that a first filter is a target filter used to filter the current picture block at a boundary, where the boundary is a boundary between the current picture block and a neighboring picture block of the current picture block; or if a block dimension of the current picture block is less than the first threshold, determining that a second filter is a target filter used to filter the current picture block at the boundary, where filtering strength of the first filter is greater than filtering strength of the second filter, and a block dimension of the current picture block is the width or height of the current picture block; and performing, by using the target filter, filtering processing on filtering pixels in the current picture block that neighbor to the boundary. For explanations and advantageous effects of related content in this solution, refer to other parts in this specification.

In a possible design, the first threshold is $2^n$, where $2 \leq n \leq 8$.

According to a third aspect, an embodiment of this application provides a picture filtering apparatus. The apparatus may be configured to perform the method provided in either the first aspect or the second aspect. The apparatus may be specifically the picture filtering apparatus described in the first aspect or the second aspect. In an example, the picture filtering apparatus may be a chip.

In a possible design, the picture filtering apparatus may be divided into functional modules according to the method provided in the first aspect or the second aspect. For example, division into the functional modules may be performed in correspondence to functions, or two or more functions may be integrated into one processing module.

In a possible design, the picture filtering apparatus may include a memory and a processor, the memory is configured to store program code, and when the program code is executed by the processor, the method provided in either the first aspect or the second aspect is performed.

According to a fourth aspect, an embodiment of this application provides a video encoder, including a reconstructor, a loop filter, and an entropy encoder.

The reconstructor is configured to: reconstruct a current encoding picture block, and output the reconstructed current picture block to a filter, for example, configured to reconstruct the current picture block based on a residual of the current encoding picture block and a prediction block of the current encoding picture block.

The loop filter may be or may include the picture filtering apparatus provided in the third aspect. For example, the loop filter may be configured to: determine, based on dimension information of the reconstructed current picture block that is to be filtered, a target filter used to filter the reconstructed current picture block; and perform filtering processing on the reconstructed current picture block by using the target filter. The dimension information includes the width or height of the reconstructed current picture block. For another example, the loop filter may be configured to: if a block dimension of a current picture block is greater than or equal to a first threshold, determine that a first filter is a target filter used to filter the current picture block at a boundary, where the boundary is a boundary between the current picture block and a neighboring picture block of the current picture block; or if a block dimension of the current picture block is less than the first threshold, determine that a second filter is a target filter used to filter the current picture block at the boundary, where filtering strength of the first filter is greater than filtering strength of the second filter, and the block dimension of the current picture block is the width or height of the current picture block; and perform filtering processing on filtering pixels in the current picture block that neighbor to the boundary.

The entropy encoder is configured to encode an identifier into a stream. The identifier is used to indicate whether the current picture block is filtered based on the dimension information of the current picture block.

According to a fifth aspect, an embodiment of this application provides a video encoder, including an entropy decoder, a loop reconstructor, and a filter.

The entropy decoder is configured to parse a stream to obtain an identifier. The identifier is used to indicate whether to filter a to-be-filtered reconstructed current picture block based on dimension information of the current picture block, and the dimension information includes the width or height of the current picture block.

The reconstructor is configured to: reconstruct a current decoding picture block, and output the reconstructed current picture block to the filter, for example, configured to reconstruct the current picture block based on a residual of the current encoding picture block and a prediction block of the current encoding picture block.

The loop filter may be or may include the picture filtering apparatus provided in the third aspect. For example, the filter may be configured to: determine, based on the dimension information of the reconstructed current picture block, a target filter used to filter the reconstructed current picture block; and perform filtering processing on the reconstructed current picture block by using the target filter. For another example, the loop filter may be configured to: if a block dimension of the current picture block is greater than or equal to a first threshold, determine that a first filter is a target filter used to filter the current picture block at a boundary, where the boundary is a boundary between the current picture block and a neighboring picture block of the current picture block; or if a block dimension of the current picture block is less than the first threshold, determine that a second filter is a target filter used to filter the current picture block at the boundary, where filtering strength of the first filter is greater than filtering strength of the second filter, and the block dimension of the current picture block is the width or height of the current picture block; and perform filtering processing on filtering pixels in the current picture block that neighbor to the boundary.

According to a sixth aspect, an embodiment of this application provides a video data encoding device. The device may include:

a memory, configured to store video data, where the video data includes one or more picture blocks; and
a video encoder, configured to: encode an identifier into a stream, where the identifier is used to indicate whether to filter a to-be-filtered current picture block based on dimension information of the current picture block, in other words, to indicate whether to perform filtering processing on the current picture block by using the picture filtering method provided in this application; and when the identifier is used to indicate to filter the current picture block based on the dimension information of the current picture block, determine, based on the dimension information of the current picture block, a target filter used to filter the current picture block; and perform filtering processing on the current picture block by using the target filter, where the dimension information of the current picture block includes the width or height of the current picture block.

According to a seventh aspect, an embodiment of this application provides a video data decoding device. The device may include:

a memory, configured to store video data in a form of a stream; and
a video decoder, configured to: decode a stream to obtain an identifier, where the identifier is used to indicate whether to filter a to-be-filtered current picture block based on dimension information of the current picture block, in other words, to indicate whether to perform filtering processing on the current picture block by using the picture filtering method provided in this application; and when the identifier is used to indicate to filter the current picture block based on the dimension information of the current picture block, determine, based on the dimension information of the current picture block, a target filter used to filter the current picture block; and perform filtering processing on the current picture block by using the target filter, where the dimension information of the current picture block includes the width or height of the current picture block.

According to an eighth aspect, an embodiment of this application provides an encoding device, including a nonvolatile memory and a processor that are coupled to each other, where the processor invokes program code stored in the memory, to perform some or all of steps in the method provided in either the first aspect or the second aspect.

According to a ninth aspect, an embodiment of this application provides a decoding device, including a non-volatile memory and a processor that are coupled to each other, where the processor invokes program code stored in the memory, to perform some or all of steps in the method provided in either the first aspect or the second aspect.

According to a tenth aspect, an embodiment of this application provides a processing apparatus, configured to implement the function of the foregoing picture filtering apparatus. The processing apparatus includes a processor and an interface. The processing apparatus may be a chip. The processor may be implemented by hardware, or may be implemented by software. When the processor is implemented by hardware, the processor may be a logic circuit, an integrated circuit, or the like; or when the processor is implemented by software, the processor may be a general-purpose processor, and is implemented by reading software code stored in the memory. The memory may be integrated into the processor, may be located outside the processor, or may exist independently.

According to an eleventh aspect, an embodiment of this application provides a computer-readable storage medium. The computer readable storage medium stores program code, and the program code includes instructions for performing some or all of the steps in the method provided in either the first aspect or the second aspect.

According to a twelfth aspect, an embodiment of this application provides a computer program product. When the computer program product is run on a computer, the computer is enabled to perform some or all of steps in the method provided in either the first aspect or the second aspect.

It should be understood that technical solutions of the third to the twelfth aspects of this application are consistent with technical solutions of the first aspect or the second aspect of this application, and advantageous effects achieved by the aspects and the corresponding feasible implementations are similar. Details are not described again. It should be understood that, unless otherwise specified, current picture blocks described in different positions in this application are all a same picture block.

**BRIEF DESCRIPTION OF DRAWINGS**

FIG. 1 is a schematic diagram of a deblocking filtering method in the prior art;
FIG. 2 is a schematic block diagram of a filter applicable to an embodiment of this application;
FIG. 3 is a schematic diagram of another deblocking filtering method in the prior art;
FIG. 4 is a schematic block diagram of a video encoding and decoding system applicable to an embodiment of this application;
FIG. 5 is a flowchart of a picture filtering method for encoding a video picture according to an embodiment of this application;
FIG. 6 is a flowchart of a picture filtering method for decoding a video picture according to an embodiment of this application;
FIG. 7A is a schematic block diagram of a video encoder applicable to an embodiment of this application;
FIG. 7B is a schematic block diagram of a video decoder applicable to an embodiment of this application;
FIG. 8 is a schematic flowchart of a picture filtering method according to an embodiment of this application;
FIG. 9 is a schematic diagram of a relationship between a boundary and a block dimension according to an embodiment of this application;
FIG. 10A is a schematic flowchart of another picture filtering method according to an embodiment of this application;
FIG. 10B is a schematic flowchart of still another picture filtering method according to an embodiment of this application;
FIG. 11 is a schematic flowchart of a method for determining a target filter according to an embodiment of this application;
FIG. 12 is a schematic flowchart of another method for determining a target filter according to an embodiment of this application;
FIG. 13 is a schematic diagram of a picture filtering method according to an embodiment of this application;
FIG. 14 is a schematic diagram of a picture filtering apparatus according to an embodiment of this application; and
FIG. 15 is a schematic block diagram of an encoding device or a decoding device applicable to an embodiment of this application.

**DESCRIPTION OF EMBODIMENTS**

First, terms and technologies in this application are briefly described, to facilitate understanding of readers.
In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. It should be noted that, in a formula, "/" represents division. For example, A/B may represent that A is divided by B. In addition, in the description of this application, "a plurality of" means more than two unless otherwise specified. In addition, to clearly describe the technical solutions in the embodiments of this application, terms such as "first" and "second" are used in the embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.
A picture block may be a rectangular picture region in a frame of picture (for example, a reconstructed picture), and includes A x B pixels. Therefore, the picture block may also be referred to as an AxB pixel array including A rows and B columns of pixels. The pixel may include a luminance pixel and/or a chrominance pixel. Pixels in a picture region may be some or all samples in the picture region. Values of A and B may or may not be equal. The values of A and B are generally integer powers of 2, for example, 256, 128, 64, 32, 16, 8, or 4. For a picture block determining method, reference may be made to, for example, but not limited to, a method for determining a coding unit (CU) in the prior art, a method for determining a sub-block of a CU, for example, a prediction unit (prediction unit, PU) or a transform unit (transform unit, TU) in the prior art, or the like. The CU is a base unit for performing video encoding or video decoding. A PU is a base unit for performing a prediction operation. A TU is a base unit for performing a transform operation and an inverse transform operation. One CU may be further divided into two or four PUs, or one CU is used as one PU. One CU may be further divided into a plurality of TUs, or one CU is used as one TU. It should be noted that, in this application, a "pixel" and a "filtering pixel" have a same meaning unless otherwise specified, and may be used interchangeably.
A boundary, that is, a block boundary, is a boundary between two neighboring picture blocks, and may include a vertical boundary and/or a horizontal boundary.

A deblocking filtering method defined in the H.265 standard is used for picture blocks with a size greater than or equal to 8x8 on two sides of all PU and TU boundaries in a reconstructed picture. In addition, two types of filtering strength are defined in the H.265 standard: strong filtering and weak filtering. Specifically, if picture blocks on two sides of a boundary need to be filtered, whether filtering strength of the boundary is strong filtering or weak filtering is determined. If filtering strength of the boundary is strong filtering, three pixels in a picture on a side of the boundary are filtered by using four or five pixels in picture blocks on two sides of the boundary, where the three pixels are in a row/column of pixels perpendicular to the boundary and are closest to the boundary, and the four or five pixels are in a row/column of pixels perpendicular to the boundary and are closest to the boundary. In other words, values of the three pixels are refined. If filtering strength of the boundary is weak filtering, one or two pixels in a picture block on a side of the boundary are filtered by using four pixels in picture blocks on two sides of the boundary, where the one or two pixels are in a row/column of pixels perpendicular to the boundary and are closest to the boundary, and the four pixels are in a row/column of pixels perpendicular to the boundary and are closest to the boundary. In other words, a value or values of the one or two pixels is/are refined. How to determine whether picture blocks on two sides of a boundary need to be filtered and how to determine whether filtering strength of a boundary is strong filtering or weak filtering have been described in detail in H.265, and details are not described herein.

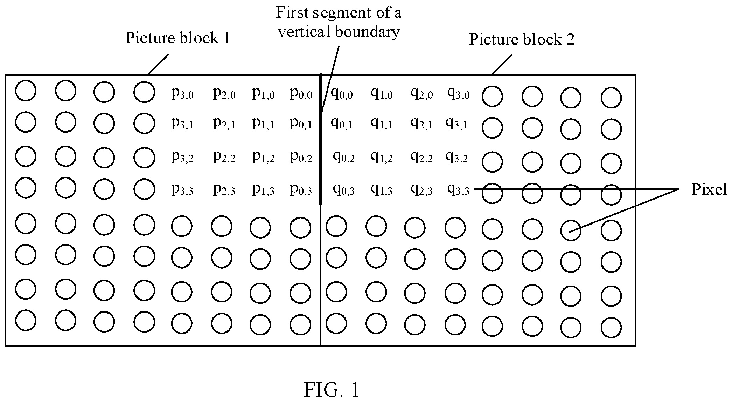

More specifically, in the H.265 standard, for any boundary, the boundary is usually divided into several segments by using four pixels as a step, and then filtering strength is determined once based on each segment. That the boundary is a vertical boundary is used as an example. As shown in FIG. 1, picture blocks (to be specific, a picture block 1 and a picture block 2) on two sides of the vertical boundary are both 8x8 picture blocks, and the vertical boundary may be divided into two segments. If filtering strength of the vertical boundary determined based on a first segment (that is, the filtering strength of the first segment at the vertical boundary) is strong filtering, pixels $p_{0,i}, p_{1,i}, p_{2,i}, q_{0,i}, q_{1,i}, q_{2,i}$ are filtered; or if filtering strength of the vertical boundary determined based on a first segment is weak filtering, pixels $p_{0,i}, p_{1,i}, q_{0,i}, q_{1,i}$ or $p_{0,i}, q_{0,i}$ are filtered. $i = 0,1,2,3$.

In an example in which pixels in the picture block 1 are filtered, $p_{0,i}, p_{1,i}, p_{2,i}$ are respectively filtered by using the following formulas 1 to 3:

$$\text{formula 1:} \quad p_{0,i}^{'} = (p_{2,i} + 2p_{1,i} + 2p_{0,i} + 2q_{0,i} + q_{1,i} + 4) >> 3,$$

$$\text{formula 2:} \quad p_{1,i}^{'} = (p_{2,i} + p_{1,i} + p_{0,i} + q_{0,i} + 2) >> 2, \text{ and}$$

$$\text{formula 3:} \quad p_{2,i}^{'} = (2p_{3,i} + 3p_{2,i} + p_{1,i} + p_{0,i} + q_{0,i} + 4) >> 3.$$

$i = 0,1,2,3$, $p_{0,i}$ represents a filtered pixel obtained after $p_{0,i}$ is filtered, $p_{1,i}$ represents a filtered pixel obtained after $p_{1,i}$ is filtered, and $p_{2,i}$ represents a filtered pixel obtained after $p_{2,i}$ is filtered.

In an example in which pixels in the picture block 1 are filtered, $p_{0,i}, p_{1,i}$ are respectively filtered by using the following formula 4 and formula 5; or only $p_{0,i}$ is filtered by using the following formula 4:

$$\text{formula 4:} \quad p_{0,i}^{'} = p_{0,i} + ((9*(q_{0,i} - p_{0,i}) - 3*(q_{1,i} - p_{1,i}) + 8) >> 4),$$

and

$$\text{formula 5:}$$

$$p_{1,i}^{'} = p_{1,i} + (((p_{2,i} + p_{0,i} + 1) >> 1 - p_{1,i} + (9*(q_{0,i} - p_{0,i}) - 3*(q_{1,i} - p_{1,i}) + 8) >> 4) >> 1).$$

The filter may be understood as a filtering solution (or a filtering method), or may be understood as a functional module for implementing a filtering solution. The filter may be implemented by using software, or may be implemented by using hardware, or may be implemented by using software in combination with hardware. This is not limited in the embodiments of this application. The filter shall not be limitatively understood as a filter of a physical structure. The filtering solution may be represented by using, for example, but not limited to, formulas, for example, the foregoing formula 1 to formula 3.

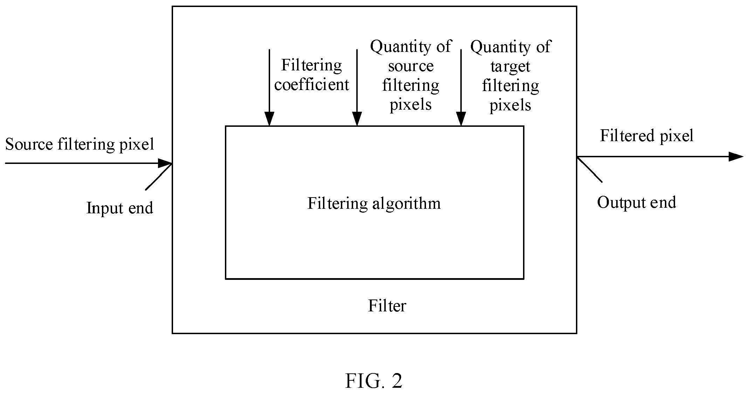

For example, the filter is a functional module for implementing a filtering solution. FIG. 2 is a schematic block diagram of a filter applicable to an embodiment of this application. The filter shown in FIG. 2 may include an input end and an output end. The input end is configured to input a source filtering pixel (to be specific, a value of the source filtering pixel). The output end is configured to output a filtered pixel (to be specific, a value of the filtered pixel) corresponding to a target filtering sample.

The source filtering pixel is a pixel used for filtering, and may also be referred to as a reconstructed pixel or a reconstructed sample. For example, if a picture block on a side of a boundary is to be filtered, a source filtering pixel may be one or more pixels in picture blocks on two sides of the boundary, where the one or more pixels are in a row/column of pixels perpendicular to the boundary and are closest to the boundary. For example, with reference to FIG. 1, if filtering strength of the boundary is strong filtering, source filtering pixels are $p_{0,i}$, $p_{1,i}$, $p_{2,i}$, $p_{3,i}$, $q_{0,i}$, $q_{1,i}$, $q_{2,i}$, $q_{3,i}$.

The target filtering pixel quantity is an actually filtered pixel. For example, if a picture block on a side of a boundary is to be filtered, a target filtering pixel may be one or more pixels, closest to the boundary, in the source filtering pixels. For example, with reference to FIG. 1, if filtering strength of the boundary is strong filtering, target filtering pixels are $p_{0,i}$, $p_{1,i}$, $p_{2,i}$, $q_{0,i}$, $q_{1,i}$, $q_{2,i}$.

The filtered pixel is a pixel obtained after filtering processing is performed on the target filtering pixel. The filtered pixel may also be referred to as a modified (or refined) pixel or a modified (or refined) sample. It may be understood that target filtering pixels one-to-one correspond to filtered pixels. For example, the target filtering pixel and the filtered pixel are in a same position in the picture block, but values of the target filtering pixel and the filtered pixel are usually different. For example, with reference to FIG. 1, if the filtering strength of the boundary is strong filtering, filtered pixels are pixels obtained after target filtering pixels $p_{0,i}$, $p_{1,i}$, $p_{2,i}$, $q_{0,i}$, $q_{1,i}$, $q_{2,i}$ are filtered. For example, for the picture block 1, filtered pixels may be $p_{0,i}$, $p_{1,i}$, $p_{2,i}$.

Attributes of a filter may include a filtering algorithm (which may also be referred to as a filtering algorithm model) and a filtering parameter. The filtering parameter may include a filtering coefficient, a quantity of source filtering pixels, a quantity of target filtering pixels, and the like. If any attribute of one filter is different from that of the other filter, it may be considered that the two filters are different.

The filtering algorithm is a model that represents an association relationship between a filtered pixel and a source filtering pixel. It may be understood that, FIG. 2 shows a filtering solution (for example, the filtering solution represented by the foregoing formula 1, formula 2 or formula 3) in which an association relationship between a filtered pixel and a source filtering pixel can be obtained by inputting a filtering parameter into a filtering algorithm model. The filtering algorithm may include, for example, but is not limited to, one of the following: a Gaussian filtering algorithm, a Wiener filtering algorithm, and a mean filtering algorithm.

Quantity of source filtering pixels: For example, with reference to FIG. 1, if filtering strength of the vertical boundary shown in FIG. 1 is strong filtering, source filtering pixels are $p_{0,i}$, $p_{1,i}$, $p_{2,i}$, $p_{3,i}$, $q_{0,i}$, $q_{1,i}$, $q_{2,i}$, $q_{3,i}$. For each of the first four rows of pixels in any picture block (for example, the picture block 1 or the picture block 2) on the two sides of the vertical boundary, a quantity of source filtering pixels is 8.

Quantity of target filtering pixels: The quantity of target filtering pixels may or may not be equal to the quantity of source filtering pixels. If the quantity of target filtering pixels is not equal to the quantity of source filtering pixels, the quantity of target filtering pixels is usually less than the quantity of source filtering pixels. For example, with reference to FIG. 1, if filtering strength of the vertical boundary shown in FIG. 1 is strong filtering, target filtering pixels are $p_{0,i}$, $p_{1,i}$, $p_{2,i}$, $q_{0,i}$, $q_{1,i}$, $q_{2,i}$. For each of the first four rows of pixels in any picture block (for example, the picture block 1 or the picture block 2) on the two sides of the vertical boundary, a quantity of target filtering pixels is 3.

The filtering coefficient is a coefficient used in a filtering process. For example, with reference to the foregoing formula 1, filtering coefficients may include a coefficient 1 of $p_{2,i}$, a coefficient 2 of $p_{1,i}$, a coefficient 2 of $p_{0,i}$, a coefficient 1 of $q_{1,i}$, and a constant 4.

In conclusion, a working principle of the filter may be described as: performing filtering processing on filtering pixels (that is, target filtering pixels) corresponding to a quantity of target filtering pixels by using a filtering algorithm, a filtering coefficient, a quantity of source filtering pixels, and the quantity of target filtering pixels, to obtain filtered pixels corresponding to the target filtering pixels.

It should be noted that, for ease of description only, terms such as the "source filtering pixels" and the "target filtering pixels" are defined in this application. It should be understood that the terms should not be construed as a limitation to the embodiments of this application. In an example implementation, the source filtering pixels may be replaced with or may be understood as filtering pixels corresponding to the quantity of source filtering pixels, and the target filtering pixels may be replaced with or may be understood as filtering pixels corresponding to the quantity of target filtering pixels.

It should be noted that in the related technical solution provided in this application, in a process of determining filtering strength of a boundary, a specific quantity of pixels that is used as a step to determine the filtering strength of the boundary once is not limited. In other words, in the embodiments of this application, a manner of performing filtering at an entire boundary is compatible with a process of performing filtering at a boundary in an existing standard, for example, filtering is performed by using four rows or columns neighboring to the boundary as a group as described above, and this is not limited thereto.

It should be noted that the filtering strength of the filter is related to any one or more attributes of the filter. In other words, any one or more attributes of the filter may affect the filtering strength of the filter. For example, a larger quantity of source filtering pixels in attributes of the filter indicates higher filtering strength of the filter. For another example, a larger quantity of target filtering pixels in attributes of the filter indicates higher filtering strength of the filter. For still another example, when another attribute is specified, if filtering algorithms (for example, a Gaussian filtering algorithm and a Wiener filtering algorithm) are different, the filters also have different filtering strength.

A deblocking filtering method defined in the H.265 standard is based on a boundary of a PU or TU, and a size of the PU and a size of TU range from 8x8 to 64x64. However, in a next-generation video coding technology, a size of a picture block may range from 4x4 to 256x256. If the foregoing method is still used to perform deblocking filtering, the following problems may be caused:

First, for a comparatively large picture block such as a 256x256 picture block, a proportion of filtered pixels (that is, target filtering pixels) in all pixels in the picture block is comparatively low. This causes a poor deblocking filtering effect.

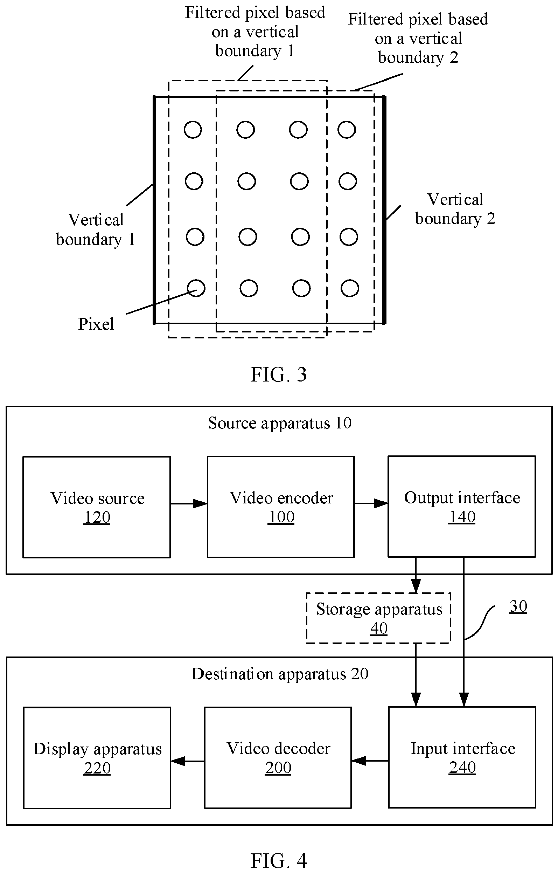

Second, for a comparatively small picture block such as a 4x4 picture block, some pixels in the picture block may be repeatedly filtered when deblocking filtering is performed based on different block boundaries of the picture block. This causes unnecessary calculation and increases calculation complexity. For example, FIG. 3 is a schematic diagram of a 4x4 picture block. The picture block includes vertical boundaries 1 and 2. If both filtering strength of the vertical boundary 1 and filtering strength of the vertical boundary 2 that are determined when deblocking filtering is performed according to the foregoing method are strong filtering, filtering the picture block based on the vertical boundary 1 is specifically: filtering the first three columns (that is, a column 1 to a column 3) of pixels in the picture block; and filtering the picture block based on the vertical boundary 2 is specifically: filtering the last three columns (that is, a second column 2 to a column 4) of pixels in the picture block. Consequently, the two middle columns (that is, the column 2 and the column 3) of pixels in the picture block are filtered repeatedly. This increases calculation complexity.

Based on this, the embodiments of this application provide a picture filtering method and apparatus, and a video codec.

The following describes a system architecture to which the technical solutions provided in the embodiments of this application are applicable.

FIG. 4 is a block diagram of a video coding system 1 applicable to an example of an embodiment of this application. In this application, the term "video coding" or "coding" may generally refer to video encoding or video decoding. A video encoder 100 and/or a video decoder 200 in the video coding system 1 may filter a to-be-filtered current picture block (for example, but not limited to, a picture block in a reconstructed picture) based on an example of any picture filtering method provided in this application. Specifically, a target filter used to filter the to-be-filtered current picture block is determined based on dimension information of the current picture block (which is also referred to as a block dimension of the current picture block), and then the current picture block is filtered by using the target filter. Based on this, properly setting an association relationship between a block dimension of the current picture block and a target filter helps improve filtering performance, thereby improving video encoding and decoding performance. The dimension information of the current picture block (or the block dimension of the current picture block) includes the width or height of the current picture block.

As shown in FIG. 4, the video coding system 1 includes a source apparatus 10 and a destination apparatus 20. The source apparatus 10 generates encoded video data. Therefore, the source apparatus 10 may be referred to as a video encoding apparatus. The destination apparatus 20 may decode the encoded video data generated by the source apparatus 10. Therefore, the destination apparatus 20 may be referred to as a video decoding apparatus. The source apparatus 10, the destination apparatus 20 or various implementation solutions of the source apparatus 10 and the destination apparatus 20 may include one or more processors and a memory coupled to the one or more processors. The memory may include but is not limited to a random access memory (random access memory, RAM), a read-only memory (read-only memory, ROM), an electrically erasable programmable read-only memory (electrically erasable programmable read-only memory, EEPROM), a flash memory, or any other medium that can be used to store required program code in a form of an instruction or a data structure accessible by a computer, as described in this specification.

The source apparatus 10 and the destination apparatus 20 may include various apparatuses, including a desktop computer, a mobile computing apparatus, a notebook (for example, laptop) computer, a tablet computer, a set top box, a handheld telephone set such as a "smart" phone, a television set, a camera, a display apparatus, a digital media player, a video game console, an in-vehicle computer, or a similar apparatus.

The destination apparatus 20 may receive the encoded video data from the source apparatus 10 over a link 30. The link 30 may include one or more media or apparatuses that can transfer the encoded video data from the source apparatus 10 to the destination apparatus 20. In an example, the link 30 may include one or more communications media that enable the source apparatus 10 to directly send the encoded video data to the destination apparatus 20 in real time. In this example, the source apparatus 10 may modulate the encoded video data according to a communications standard (for example, a wireless communications protocol), and may send modulated video data to the destination apparatus 20. The one or more communications media may include a wireless and/or wired communications medium, for example, a radio frequency (radio frequency, RF) spectrum or one or more physical transmission lines. The one or more communications media may constitute a part of a packet-based network, and the packet-based network is, for example, a local area network, a wide area network, or a global network (for example, the internet). The one or more communications media may include a router, a switch, a base station, or another device facilitating communication from the source apparatus 10 to the destination apparatus 20.

In another example, the encoded data may be output to a storage apparatus 40 through an output interface 140. Similarly, the encoded video data may be accessed from the storage apparatus 40 through an input interface 240. The storage apparatus 40 may include any one of a plurality of distributed or locally accessible data storage media, for example, a hard disk drive, a Blu-ray disc, a digital versatile disc (digital versatile disc, DVD), a compact disc read-only memory (compact disc read-only memory, CD-ROM), a flash memory, a volatile or nonvolatile memory, or any other appropriate digital storage medium configured to store the encoded video

In another example, the storage apparatus 40 may correspond to a file server, or another intermediate storage apparatus that can maintain the encoded video data generated by the source apparatus 10. The destination apparatus 20 may access the stored video data from the storage apparatus 40 through streaming transmission or downloading. The file server may be any type of server that can store the encoded video data and that sends the encoded video data to the destination apparatus 20. An example of the file server includes a network server (for example, used for a website), a file transfer protocol (file transfer protocol, FTP) server, a network attached storage (network attached storage, NAS) apparatus, or a local disk drive. The destination apparatus 20 may access the encoded video data through any standard data connection (including an internet connection). The standard data connection may include a wireless channel (for example, a Wi-Fi connection), a wired connection (for example, a digital subscriber line (digital subscriber line, DSL) or a cable modem), or a combination thereof that is suitable for accessing the encoded video data stored on the file server. Transmission of the encoded video data from the storage apparatus 40 may be streaming transmission, downloading transmission, or a combination thereof.

The picture filtering method provided in this application may be applied to video encoding and decoding, to support a plurality of multimedia applications, for example, over-the-air television broadcasting, cable television transmission, satellite television transmission, streaming video transmission (for example, over the internet), encoding of video data stored in a data storage medium, decoding of video data stored in a data storage medium, or another application. In some examples, the video coding system 1 may be configured to support unidirectional or bidirectional video transmission, to support applications such as video streaming transmission, video playback, video broadcasting, and/or videotelephony.

The video coding system 1 described in FIG. 4 is merely an example, and the technology in this application is applicable to a video coding (for example, video encoding or video decoding) apparatus that does not necessarily include any data communication between a video encoding apparatus and a video decoding apparatus. In another example, data is retrieved from a local memory, is transmitted on a network in a streaming manner, and the like. The video encoding apparatus may encode the data and store the data into the memory, and/or the video decoding apparatus may retrieve the data from the memory and decode the data. In many examples, apparatuses that only encode data and store the data into the memory and/or retrieve the data from the memory and decode the data and that do not communicate with each other perform encoding and decoding.

In the example in FIG. 4, the source apparatus 10 includes a video source 120, the video encoder 100, and the output interface 140. In some examples, the output interface 140 may include an adjuster/a demodulator (modem) and/or a sender (which may also be referred to as a transmitter). The video source 120 may include a video capturing apparatus (for example, a camera), a video archive including previously captured video data, a video feed-in interface for receiving video data from a video content provider, and/or a computer graphics system for generating video data, or a combination of these sources of video data.

The video encoder 100 may encode video data that is from the video source 120. In some examples, the source apparatus 10 directly sends the encoded video data to the destination apparatus 20 through the output interface 140. In another example, the encoded video data may be alternatively stored into the storage apparatus 40, so that the destination apparatus 20 subsequently accesses the encoded video data for decoding and/or playing.

In the example in FIG. 4, the destination apparatus 20 includes the input interface 240, the video decoder 200, and a display apparatus 220. In some examples, the input interface 240 includes a receiver and/or a modem. The input interface 240 may receive the encoded video data over the link 30 and/or from the storage apparatus 40. The display apparatus 220 may be integrated with the destination apparatus 20 or may be located outside the destination apparatus 20. Generally, the display apparatus 220 displays decoded video data. The display apparatus 220 may include a plurality of types of display apparatuses, for example, a liquid crystal display (liquid crystal display, LCD), a plasma display, an organic light-emitting diode (organic light-emitting diode, OLED) display, or a display apparatus of another type.

Although not shown in FIG. 4, in some aspects, the video encoder 100 and the video decoder 200 may be integrated with an audio encoder and an audio decoder respectively, and may include an appropriate multiplexer-demultiplexer (multiplexer-demultiplexer, MUX-DEMUX) unit or other hardware and software, to encode an audio and a video in a same data stream or separate data streams. In some examples, if applicable, the MUX-DEMUX unit can conform to the ITU H.223 multiplexer protocol, or another protocol such as user datagram protocol (user datagram protocol, UDP).

The video encoder 100 and the video decoder 200 each may be implemented as any one of a plurality of circuits: one or more microprocessors, a digital signal processing (digital signal processing, DSP), an application-specific integrated circuit (application specific integrated circuit, ASIC), and a field-programmable gate array (field-programmable gate array, FPGA), a discrete logic, hardware, or any combination thereof. If this application is implemented partially by using software, the apparatus may store, in a proper non-volatile computer-readable storage medium, an instruction used for the software, and may use one or more processors to execute the instruction on hardware, to implement the technologies in this application. Any one of the foregoing content (including hardware, software, a combination of hardware and software, and the like) may be considered as one or more processors. The video encoder 100 and the video decoder 200 each may be included in one or more encoders or decoders, and either the encoder or the decoder may be integrated as a part of a combined encoder/decoder (codec) in a corresponding apparatus.

In this application, the video encoder 100 may be roughly referred to as another apparatus "signaling" or "sending" some information to, for example, the video decoder 200. The term "signaling" or "sending" may roughly be transferring a syntactic element and/or other data used to decode compressed video data. The transfer may occur in real time or almost in real time. Alternatively, the communication may occur after a period of time, for example, may occur when a syntactic element in an encoded bitstream is stored into a computer-readable storage medium during encoding, and then, the decoding apparatus may retrieve the syntactic element at any time after the syntactic element is stored into the medium.

The video encoder 100 and the video decoder 200 may perform an operation according to, for example, a video compression standard such as high efficiency video coding (high efficiency video coding, HEVC) (that is, H.265), or an extension of the video compression standard. Alternatively, the video encoder 100 and the video decoder 200 may perform an operation according to other industry standards, for example, ITU-T H.264 and H.265 standards, or extensions of the standards. However, the technologies in this application are not limited to any specific encoding and decoding standards.

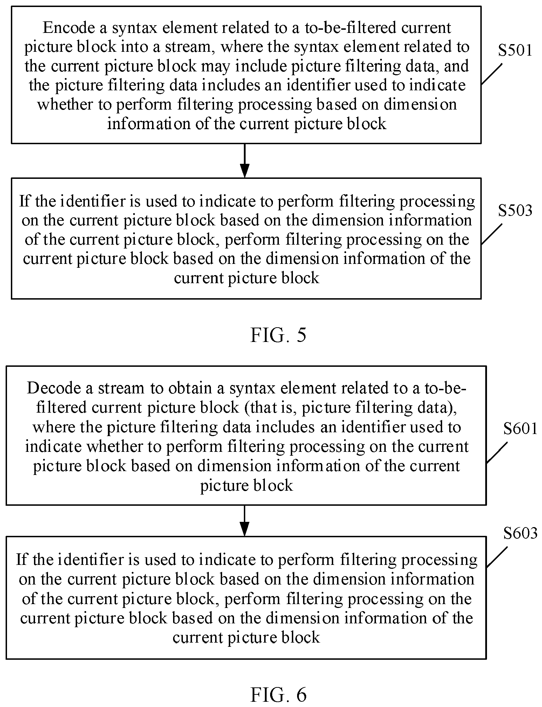

In an example, referring to FIG. 5, the video encoder 100 may be configured to encode a syntactic element related to the to-be-filtered current picture block into a digital video output bitstream (referred to as a bitstream or a stream) (S501). The syntactic element related to the current picture block may include, for example, but is not limited to, a syntactic element for performing filtering processing on the current picture block. Herein, the syntactic element for performing filtering processing on the current picture block is briefly referred to as picture filtering data. The picture filtering data may include an identifier used to indicate (specifically used to indicate the video decoder 200) whether to perform filtering processing on the current picture block based on the dimension information of the current picture block (in other words, an identifier used to indicate whether the video decoder 200 performs filtering processing on the current picture block by using the picture filtering method provided in this application). A process of processing the video data by the video encoder 100 is same as (or correspondingly same as) a process of processing the video data by the video decoder 200. Therefore, if the identifier is used to indicate the video decoder 200 to perform filtering processing on the current picture block based on the dimension information of the current picture block, after encoding the syntactic element related to the current picture block into the stream, the video encoder 100 may send the stream to the video decoder 200, and may perform filtering processing on the current picture block based on the dimension information of the current picture block (S503).

In an example, referring to FIG. 6, the video decoder 200 may be configured to decode a stream, to obtain a syntactic element (to be specific, picture filtering data) related to the to-be-filtered current picture block (S601). The picture filtering data may include an identifier used to indicate (specifically used to indicate the video decoder 200) whether to perform filtering processing on the current picture block based on the dimension information of the current picture block. If the identifier is used to indicate to perform filtering processing on the current picture block based on the dimension information of the current picture block, the video decoder 200 may perform filtering processing on the current picture block based on the dimension information of the current picture block (S603).

It should be noted that the foregoing examples shown in FIG. 5 and FIG. 6 are described by using an example in which the syntactic element (to be specific, the picture filtering data) sent by the video encoder 100 to the video decoder 200 includes the identifier used to indicate whether to perform filtering processing on the to-be-filtered current picture block based on the dimension information of the current picture block. In another example, the video encoder 100 and the video decoder 200 may also agree in advance (for example, agree in advance according to a protocol or a standard) on performing filtering processing on the current picture block based on the dimension information of the current picture block. In this case, the syntactic element (to be specific, the picture filtering data) sent by the video encoder 100 to the video decoder 200 may not include the foregoing identifier.

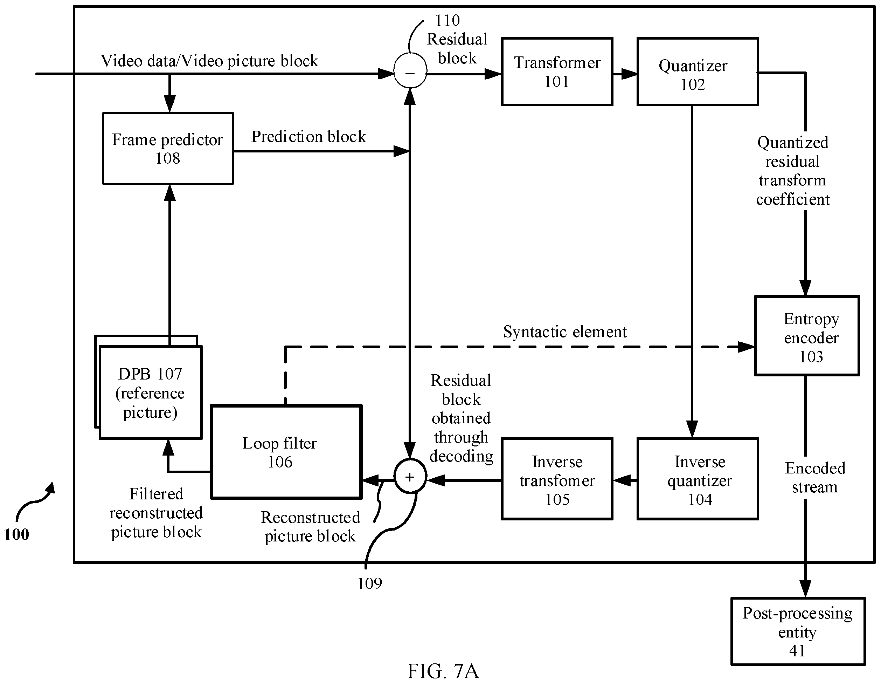

FIG. 7A is a block diagram of a video encoder 100 applicable to an example of an embodiment of this application. The video encoder 100 is configured to output a video to a post-processing entity 41. The post-processing entity 41 represents an example of a video entity that can process encoded video data that is from the video encoder 100. For example, the video entity is a media aware network element (MANE) or a splicing apparatus/an editing apparatus. In some cases, the post-processing entity 41 may be an example of a network entity. In some video coding systems, the post-processing entity 41 and the video encoder 100 may be components of separate apparatuses, while in other cases, functions described with respect to the post-processing entity 41 may be implemented by a same apparatus including the video encoder 100. In an example, the post-processing entity 41 is an example of the storage apparatus 40 in FIG. 4.

In the example in FIG. 7A, the video encoder 100 includes a prediction processing unit 108, a loop filter unit 106, a decoded picture buffer (DPB) 107, a summator 110, a transformer 101, a quantizer 102, and an entropy encoder 103. The prediction processing unit 108 (which is marked as a frame predictor 108 in FIG. 7A) may include an inter predictor and an intra predictor. To reconstruct a picture block, the video encoder 100 further includes an inverse quantizer 104, an inverse transformer 105, and a summator 109 (which is also referred to as a reconstructor 109). The loop filter unit 106 is specified to represent one or more loop filters, and may include, for example, at least one of the following: a deblocking filter, an adaptive loop filter (adaptive loop filter, ALF), and a sample adaptive offset (sample adaptive offset, SAO) filter. It should be noted that, although the loop filter unit 106 is shown as an in loop filter in FIG. 7A, in another implementation, the loop filter unit 106 may be implemented as a post-loop filter. In an example, the video encoder 100 may further include a video data memory, a partition unit (or referred to as a division unit), and the like (which are not shown in the figure).

The video data memory may store video data that is to be encoded by a component of the video encoder 100. The video data stored in the video data memory may be obtained from the video source 120. The DPB 107 may be a reference picture memory that stores reference video data used for encoding the video data by the video encoder 100 in an intra or inter coding mode. The video data memory and the DPB 107 may be constituted by any one of a plurality of types of memory apparatuses: a dynamic random access memory (dynamic RAM, DRAM) including a synchronous DRAM (synchronous DRAM, SDRAM), a magnetoresistive RAM (magnetic RAM, MRAM), a resistive RAM (resistive RAM, RRAM), or another type of memory apparatus. The video data memory and the DPB 107 may be provided by a same memory apparatus or separate memory apparatuses. In various examples, the video data memory may be located on a chip together with other components of the video encoder 100, or may be located outside the chip relative to those components.

As shown in FIG. 7A, the video encoder 100 receives video data and stores the video data into the video data memory. The partition unit partitions the video data into several picture blocks, and these picture blocks may be further partitioned into smaller blocks, for example, picture block partitioning based on a quadtree structure or a binary-tree structure. The partitioning may alternatively include partitioning into slices (slice), tiles (tile), or other larger units. The video encoder 100 is usually a component for encoding a picture block in a to-be-encoded video slice. The slice may be partitioned into a plurality of picture blocks (and may be partitioned into a set of picture blocks referred to as tiles).

The prediction processing unit 108 may select one of a plurality of possible coding modes used for a current picture block. The prediction processing unit 108 may provide an obtained intra-coded or inter-coded block for the summator 110 to generate a residual block, and provide the residual block for the summator 109 to reconstruct an encoded block used as a reference picture.

After the prediction processing unit 108 generates a prediction block of the current picture block, the video encoder 100 subtracts the prediction block from the to-be-encoded current picture block to generate a residual picture block. The summator 110 represents one or more components that perform this subtraction operation. Residual video data in the residual block may be included in one or more TUs and applied to the transformer 101. The transformer 101 transforms the residual video data into a residual transform coefficient through transform such as discrete cosine transform (discrete cosine transform, DCT) or conceptually similar transform. The transformer 101 may convert the residual video data from a sample value domain to a transform domain, for example, a frequency domain. The transformer 101 may send the obtained transform coefficient to the quantizer 102. The quantizer 102 quantizes the transform coefficient to further reduce a bit rate. In some examples, the quantizer 102 may further scan a matrix including a quantized transform coefficient. Alternatively, the entropy encoder 103 may perform scanning.

After quantization, the entropy encoder 103 performs entropy encoding on the quantized transform coefficient. For example, the entropy encoder 103 may perform context-adaptive variable-length coding (context adaptive variable length coding, CAVLC), context-adaptive binary arithmetic coding (context based adaptive binary arithmetic coding, CABAC), or another entropy coding method or technology. After the entropy encoder 103 performs entropy encoding, an encoded bitstream may be sent to a video decoder 200, or archived for subsequent sending or for subsequent retrieval by a video decoder 200. The entropy encoder 103 may further perform entropy encoding on the syntactic element of the to-be-encoded current picture block.

The inverse quantizer 104 and the inverse transformer 105 respectively apply inverse quantization and inverse transform, to reconstruct the residual block in a sample domain for, for example, subsequent use as a reference block of a reference picture. The summator 109 adds a reconstructed residual block to the prediction block generated by the prediction processing unit 108, to generate a reconstructed picture block. A prediction block of a picture block can be obtained by processing (processing such as interpolating) a reference block of the picture block.

The loop filter unit 106 is applicable to the reconstructed picture block to reduce distortion, such as a blocking effect. Then, the reconstructed picture block is used as a reference block and stored in the DPB 107, and may be used by the prediction processing unit 108 as a reference block to predict a block in a subsequent video frame or picture. In addition, optionally, in this application, the video encoder 100 may include, in the sent bitstream, picture filtering data related to the current picture block. The picture filtering data may include an identifier used to indicate whether to perform filtering processing on the current picture block by using the picture filtering method provided in this application. A specific implementation of the picture filtering method provided in this application is described in detail below. Specifically, the loop filter unit 106 may provide the identifier for the entropy encoder 103, so that the entropy encoder 103 performs encoding to indicate the selected picture filtering method.

It should be understood that other structural variants of the video encoder 100 may be used to encode a video stream. For example, for some picture blocks or picture frames, the video encoder 100 may directly quantize a residual signal without processing by the converter 101, and correspondingly, without processing by the inverse transformer 105. Alternatively, for some picture blocks or picture frames, the video encoder 100 does not generate residual data, and correspondingly, processing by the transformer 101, the quantizer 102, inverse quantizer 104, and the inverse transformer 105 does not need to be performed. Alternatively, the quantizer 102 and the inverse quantizer 104 in the video encoder 100 may be combined together. Alternatively, the transformer 101 and the inverse transformer 105 in the video encoder 20 may be combined together. Alternatively, the summator 112 and the summator 111 may be combined together.

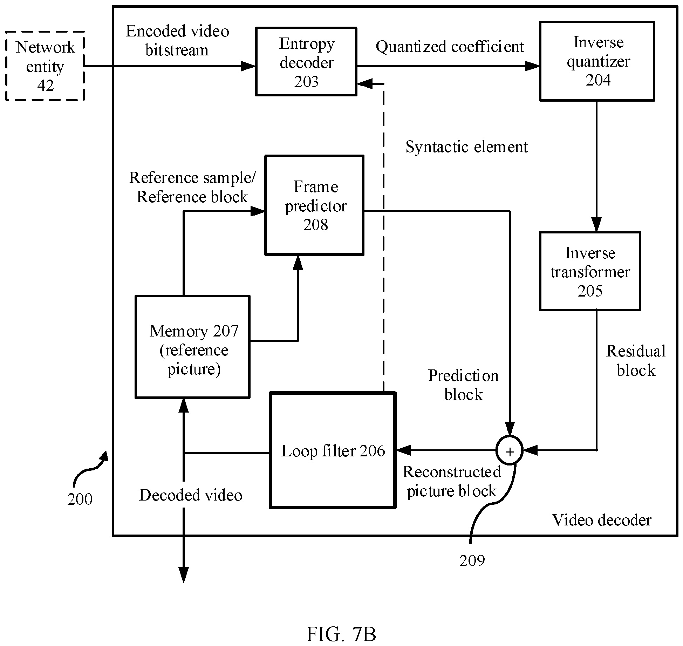

FIG. 7B is a block diagram of a video decoder 200 applicable to an example of an embodiment of this application. In the example in FIG. 7B, the video decoder 200 includes an entropy decoder 203, a prediction processing unit 208, an inverse quantizer 204, an inverse transformer 205, a summator 209, a loop filter unit 206, and a decoded picture buffer (DPB) 207. The prediction processing unit 208 (which is marked as a frame prediction unit 208 in FIG. 7B) may include an inter prediction unit and an intra prediction unit. In some examples, the video decoder 200 may perform a decoding process that is roughly inverse to the encoding process described with respect to the video encoder 100 in FIG. 7A.

During decoding, the video decoder 200 receives, from a video encoder 100, an encoded video bitstream representing a picture block of an encoded video slice and an associated syntactic element. The video decoder 200 may receive video data from a network entity 42, and optionally, may further store the video data into a video data memory (which is not shown in the figure). The video data memory may store video data that is to be decoded by a component of the video decoder 200, for example, the encoded video bitstream. The video data stored in the video data memory may be obtained from, for example, a local video source such as a storage apparatus 40 or a camera through wired or wireless network communication of the video data, or by accessing a physical data storage medium. The video data memory may be used as the DPB 207 for storing encoded video data from the encoded video bitstream. Therefore, although the video data memory is not shown in FIG. 7B, the video data memory and the DPB 207 may be a same memory, or may be separately disposed memories. The video data memory and the DPB 207 each may be constituted by any one of a plurality of types of memory apparatuses: a dynamic random access memory (DRAM) including a synchronous DRAM (SDRAM), a magnetoresistive RAM (MRAM), a resistive RAM (RRAM), or another type of memory apparatus. In various examples, the video data memory may be integrated onto a chip together with other components of the video decoder 200, or may be disposed outside the chip relative to those components.

The network entity 42 may be, for example, a server, a MANE, a video editor/splicer, or another similar apparatus configured to implement one or more of the technologies described above. The network entity 42 may or may not include a video encoder, for example, the video encoder 100. Before the network entity 42 sends the encoded video bitstream to the video decoder 200, the network entity 42 may implement a part of the technology described in this application. In some video decoding systems, the network entity 42 and the video decoder 200 may be components of separate apparatuses, while in other cases, functions described with respect to the network entity 42 may be implemented by a same apparatus including the video decoder 200. In some cases, the network entity 42 may be an example of the storage apparatus 40 in FIG. 1.

The entropy decoder 203 of the video decoder 200 performs entropy decoding on the bitstream to generate a quantized coefficient and some syntactic elements. The entropy decoder 203 forwards the syntactic elements to the loop filter unit 206. The video decoder 200 may receive syntactic elements/a syntactic element at a video slice level and/or a picture block level. In this application, in an example, the syntactic element herein may include picture filtering data related to a current picture block, and the picture filtering data may include an identifier used to indicate whether to perform filtering processing on the current picture block by using the picture filtering method provided in this application. In addition, in some examples, the picture filtering data may be a specific syntactic element used by the video encoder 100 to signal whether to perform filtering processing by using the picture filtering method provided in this application.

The inverse quantizer 204 performs inverse quantization on, that is, dequantizes, a quantized transform coefficient provided in the bitstream and decoded by the entropy decoder 203. An inverse quantization process may include: determining a to-be-applied quantization degree by using a quantization parameter calculated by the video encoder 100 for each picture block in the video slice, and similarly determining a to-be-applied inverse quantization degree. The inverse transformer 205 applies inverse transform, for example, inverse DCT, inverse integer transform, or a conceptually similar inverse transform process, to the transform coefficient, so as to generate a residual block in a sample domain.

After the prediction processing unit 208 generates a prediction block used for the current picture block or a sub-block of the current picture block, the video decoder 200 obtains a reconstructed block, that is, a decoded picture block, by adding the residual block from the inverse transformer 205 and the corresponding prediction block generated by the prediction processing unit 208. The summator 209 (which is also referred to as a reconstructor 209) represents a component that performs this adding operation. When necessary, a loop filter may be further used (in a decoding loop or after a decoding loop) to make sample transform smooth, or video quality may be improved in another manner. The loop filter unit 206 may represent one or more loop filters, for example, a deblocking filter, an adaptive loop filter (ALF), and a sample adaptive offset (SAO) filter. Although the loop filter unit 206 is shown as an in loop filter in FIG. 7B, in another implementation, the loop filter unit 206 may be implemented as a post-loop filter. In an example, the loop filter unit 206 is applicable to a reconstructed block to reduce block distortion, and the result is output as a decoded video stream. In addition, a decoded picture block in a specified frame or picture may be stored in the DPB 207, and the DPB 207 stores a reference picture used for subsequent motion compensation. The DPB 207 may be a component of the memory, and may further store a decoded video for subsequent presentation on a display apparatus (for example, the display apparatus 220 in FIG. 4); or may be separated from such type of memory.

It should be understood that other structural variants of the video decoder 200 may be used to decode the encoded video bitstream. For example, for some picture blocks or picture frames, the entropy decoder 203 of the video decoder 200 does not obtain a quantized coefficient through decoding, and correspondingly, processing by the inverse quantizer 204 and the inverse transformer 205 does not need to be performed. For example, the inverse quantizer 204 and the inverse transformer 205 in the video decoder 200 may be combined together.

The following describes in detail a process of filtering a current picture block based on dimension information of the current picture block provided in this application.

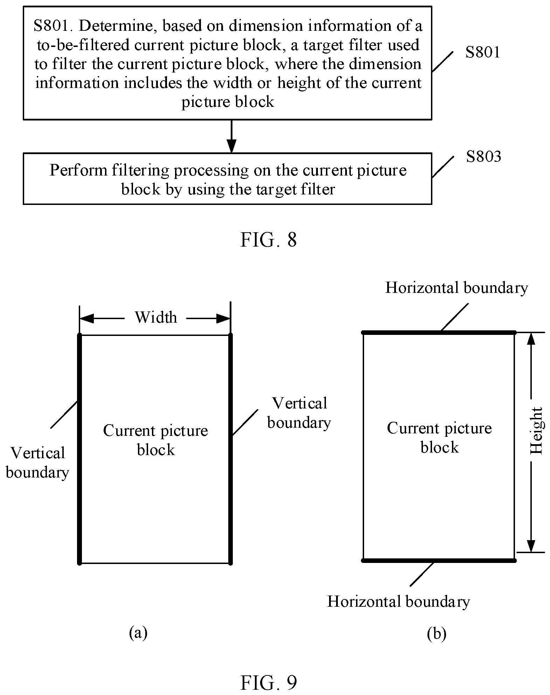

FIG. 8 is a schematic flowchart of an example of a picture filtering method described in an embodiment of this application. The method shown in FIG. 8 may be applied to a picture filtering apparatus. The picture filtering apparatus may be the loop filter unit 106 in FIG. 7A or the deblocking filter included in the loop filter unit 106 in FIG. 7A, or may be the loop filter unit 206 in FIG. 7B or the deblocking filter included in the loop filter unit 206 in FIG. 7B. Certainly, this application is not limited thereto. The method shown in FIG. 8 may include the following steps.

S801. Determine, based on dimension information of a to-be-filtered current picture block, a target filter used to filter the current picture block, where the dimension information of the current picture block includes the width or height of the current picture block.

The to-be-filtered current picture block is a picture block on which filtering processing needs to be performed currently. How to determine whether a picture block is a picture block on which filtering processing needs to be performed is not limited in this embodiment of this application. For example, whether a picture block is a picture block on which filtering processing needs to be performed may be determined in any manner provided in the prior art. A filtering type may include, for example, but is not limited to, deblocking filtering, adaptive loop filtering, sample adaptive compensation filtering, and bilateral filtering. In this embodiment of this application, a specific type of filtering that needs to be performed on the to-be-filtered current picture block is not limited. For example, the to-be-filtered current picture block may be a current picture block on which deblocking filtering is to be performed. In this case, the target filter used to filter the current picture block may be specifically a target filter used to perform deblocking filtering on the current picture block on which deblocking filtering is to be performed. The current picture block on which deblocking filtering is to be performed may be specifically a picture block in a reconstructed picture, for example, a pixel array in the reconstructed picture. Certainly, this is not limited thereto.

The dimension information of the current picture block may also be referred to as a block dimension of the current picture block, and may include the width or height of the current picture block. The width and the height of the current picture block may or may not be equal. For example, the current picture block is a pixel array. In this case, the block dimension of the current picture block may be represented by using a quantity of pixels included in one row and/or column of pixels in the pixel array, and this is used as an example for description in the following. In this application, a dimension of a picture block in a horizontal direction is the width of the picture block, and a dimension of the picture block in a vertical direction is the height of the picture block.

Optionally, a larger block dimension indicates higher filtering strength of a filter corresponding to the block dimension. Filtering strength of the filter is associated with attributes of the filter. How to determine filtering strength of a filter and how to compare filtering strength of a plurality of filters are not limited in this embodiment of this application. For example, a larger block dimension indicates a larger quantity of source filtering pixels of a filter corresponding to the block dimension. For example, a larger block dimension indicates a larger quantity of target filtering pixels of a filter corresponding to the block dimension.

S803: Perform filtering processing on the current picture block by using the target filter.

In the picture filtering method provided in this embodiment, the target filter used to filter the to-be-filtered current picture block is determined based on the dimension information of the current picture block. It can be learned that properly setting an association relationship between the block dimension of the current picture block and the target filter helps improve filtering performance. In this way, video coding performance is further improved.

Optionally, S801 may be implemented by S901. In this case, S803 may be implemented by S903.

S901: Determine, based on the dimension information of the current picture block, the target filter used to filter the current picture block at a boundary. The boundary is a boundary between the current picture block and a neighboring picture block of the current picture block. The boundary is perpendicular to a height direction of the current picture block, or the boundary is perpendicular to a width direction of the current picture block.

Specifically, the determining, based on the dimension information of the current picture block, the target filter used to filter the current picture block at a boundary may include: determining, based on a block dimension of the current picture block in a horizontal direction (which may be, for example, the height or the width of the current picture block), the target filter used to filter the current picture block at a vertical boundary; and/or determining, based on a block dimension of the current picture block in a vertical direction (which may be, for example, the width or height of the current picture block), the target filter used to filter the current picture block at a horizontal boundary.

In this application, a dimension of a picture block in a horizontal direction is the width of the picture block, and a dimension of the picture block in a vertical direction is the height of the picture block, as shown in FIG. 9. Specifically, if the boundary is a vertical boundary, the boundary is perpendicular to a width direction of the current picture block, as shown by (a) in FIG. 9. If the boundary is a horizontal boundary, the boundary is perpendicular to a height direction of the current picture block, as shown by (b) in FIG. 9. Description is provided in FIG. 9 by using an example in which the width of the current picture block is less than the height of the current picture block.

It can be understood that, based on a position of the current picture block in a current picture (for example, if the current picture block is a picture block on which deblocking filtering is to be performed, the current picture is a reconstructed picture), it may be learned that the current picture block may include two boundaries, three boundaries, or four boundaries. Target filters that are determined by the picture filtering apparatus and that are used to filter the current picture block at different boundaries may be the same or may be different. For example, if the target filter is related only to the block dimension of the current picture block, the current picture block includes two boundaries, and sizes of blocks perpendicular to the two boundaries are equal, target filters that are determined by the picture filtering apparatus and that are used to filter the current picture block at the two boundaries are the same. Specifically, the two boundaries may be two horizontal boundaries; may be two vertical boundaries; or one of the two boundaries is a horizontal boundary, and the other is a vertical boundary. For another example, if one of the two boundaries is a horizontal boundary, the other is a vertical boundary, and a dimension of a block that is in the current picture and is perpendicular to the horizontal boundary is not equal to a dimension of a block that is in the current picture and that is perpendicular to the vertical boundary, target filters that are determined by the picture filtering apparatus and that are used to filter the current picture block at the two vertical boundaries are different. An embodiment in which a target filter is related to both a block dimension and another factor (for example, a result of predetermining filtering strength of a boundary) of a current picture block is further provided below. In this embodiment, an example about whether target filters that are determined by a picture filtering apparatus and that are used to filter the current picture block at different boundaries are the same are not described in detail herein.

S903: Perform, by using the target filter, filtering processing on filtering pixels (that is, the target filtering pixels described above) in the current picture block that neighbor to the boundary.

The filtering pixels neighboring the boundary may include two cases: filtering pixels closely adjacent to (for example, directly adjacent to) the boundary and filtering pixels not closely adjacent to (for example, indirectly adjacent) the boundary. For example, the filtering pixels neighboring the vertical boundary may include: a first column of pixels directly adjacent to the vertical boundary, and a second, third, ... column of pixels indirectly adjacent to the vertical boundary. In other words, the filtering pixels neighboring the boundary may also be referred to as filtering pixels close to the boundary.

It can be learned, from the foregoing description of the working principle of the filter, that S903 may be implemented in any one of the following manners:

Manner 1: If attributes of the target filter include a filtering coefficient, a quantity of source filtering pixels, and a quantity of target filtering pixels, perform filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels.

Manner 2: If attributes of the target filter include a filtering coefficient and a quantity of source filtering pixels, perform filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to the quantity of source filtering pixels.

Manner 3: If attributes of the target filter include a filtering coefficient and a quantity of target filtering pixels, perform filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels.

Manner 4: If attributes of the target filter include a filtering coefficient, perform filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to a preset quantity of source filtering pixels.

Manner 5: If attributes of the target filter include a quantity of source filtering pixels and a quantity of target filtering pixels, perform filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels.

Manner 6: If attributes of the target filter include a quantity of source filtering pixels, perform filtering processing on filtering pixels in the current picture block based on a preset filtering coefficient and filtering pixels on two sides of the boundary, where the pixels in the current picture block neighbor to the boundary and correspond to a preset quantity of target filtering pixels, and the filtering pixels on the two sides of the boundary correspond to the quantity of source filtering pixels.

Manner 7: If attributes of the target filter include a quantity of target filtering pixels, perform filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels.

The filtering pixels corresponding to the quantity of source filtering pixels are source filtering pixels. The filtering pixels in the current picture block that neighbor to the boundary and correspond to the quantity of target filtering pixels are target filtering pixels. After filtering processing is performed, a filtered pixel corresponding to the target filtering pixel may be obtained.

The preset filtering pixel (for example, a preset source sampling filtering pixel and/or a preset target filtering pixel) described in the foregoing related manners may be understood as a preset fixed quantity of filtering pixels, and does not vary with a selected filter. For example, when the method is applied to the system architecture shown in FIG. 4, the preset filtering pixel quantity may be a fixed quantity of filtering pixels that is agreed on by the video encoder 100 and the video decoder 200 in advance.

In the foregoing related manner (for example, any one of the manners 1 to 4), the attribute of the filter includes a filtering coefficient, to be specific, an algorithm including the filtering coefficient, a value of the filtering coefficient, or the like.

The preset filtering coefficient described in the foregoing related manner (for example, any one of the manners 5 to 7) may be understood as a preset algorithm for determining a filtering coefficient. The preset filtering coefficient does not vary with a selected filter. For example, when the method is applied to the system architecture shown in FIG. 4, the preset filtering coefficient may be an algorithm that is for determining a filtering coefficient and that is agreed in advance on by the video encoder 100 and the video decoder 200.

It should be noted that, description is provided in the manners 1 to 7 by using an example in which the filtering algorithm of the target filter is a preset filtering algorithm, that is, a preset fixed filtering algorithm, and does not vary with a selected filter. Certainly, this application is not limited thereto. When filtering algorithms of different filters in the filter set are different, a specific implementation of S902 may be derived based on the foregoing description. Therefore, details are not described in this application.

In some embodiments of this application, S903 may include: performing, by using the target filter, filtering processing on the filtering pixels in the current picture block that neighbor to the boundary; and performing filtering processing on filtering pixels in the neighboring picture block of the current picture block that neighbor to the boundary. The boundary is a boundary between the current picture block and a neighboring picture block.

In other words, this embodiment of this application supports a solution in which filtering processing is performed by using a same filter on filtering pixels, neighboring the boundary, in picture blocks on the two sides of the boundary. It can be learned that this embodiment of this application is compatible with a procedure in an existing standard. This embodiment may be applied to a scenario in which dimensions (specifically, widths or heights perpendicular to the boundary) of the picture blocks on the two sides of the boundary are equal or basically the same (for example, a difference between the two dimensions is less than or equal to a specific threshold).

In other embodiments of this application, before S903, the method may further include S902:

S902. Determine, based on dimension information of the neighboring picture block of the current picture block, a second target filter used to filter the neighboring picture block at the boundary. Optionally, the target filter used to filter the current picture block and the second target filter used to filter the neighboring picture block belong to a same filter set.

In this case, S903 may include: performing, by using the target filter, filtering processing on the filtering pixels in the current picture block that neighbor to the boundary; and performing, by using the second target filter, filtering processing on filtering pixels in the neighboring picture block that neighbor to the boundary. Filtering strength of the target filter is different from filtering strength of the second target filter.

In other words, this embodiment of this application supports a solution in which filtering processing is performed by using different filters, that is, by using different filtering solutions, on filtering pixels, neighboring the boundary, in the picture blocks on the two sides of the boundary. In this way, flexibility can be improved, thereby helping improve filtering efficiency, and further improving video coding efficiency.

In some embodiments of this application, the neighboring picture block of the current picture block includes a first neighboring picture block and a second neighboring picture block, and the boundary includes a first boundary between the current picture block and the first neighboring picture block and a second boundary between the current picture block and the second neighboring picture block. The first boundary is a vertical boundary, and the second boundary is a horizontal boundary. Based on this, S801 may include:

determining, from the filter set based on the height of the current picture block through table lookup or a comparison with a threshold, a target filter used to filter the current picture block at the first boundary, where optionally, the height of the current picture block is greater than or equal to a preset value; and

determining, from the filter set based on the width of the current picture block through table lookup or a comparison with a threshold, a target filter used to filter the current picture block at the second boundary, where optionally, the width of the current picture block is greater than or equal to a preset value.

For table lookup, the comparison with a threshold, or a combination thereof, refer to the following.

It may be understood that, for a flat region of a large size, a blocking effect exerts greater impact on subjective experience; in this case, stronger filtering is required or more pixels need to be filtered. Therefore, the technical solution provided in this application may be performed when the block dimension of the current picture block is greater than or equal to a preset value. In this way, the video coding performance can be better improved.

A specific preset value is not limited in this embodiment of this application. In an example, when the preset value is equal to 4, that is, the size of the current picture block is greater than or equal to 4x4, any one of the picture filtering methods provided in the embodiments of this application is performed. In addition, because a minimum size, defined (or temporarily defined) in a next-generation video coding technology, of a picture block is 4x4, this optional implementation can avoid a logical contradiction with the next-generation video coding technology.

The following describes a specific implementation of S901.

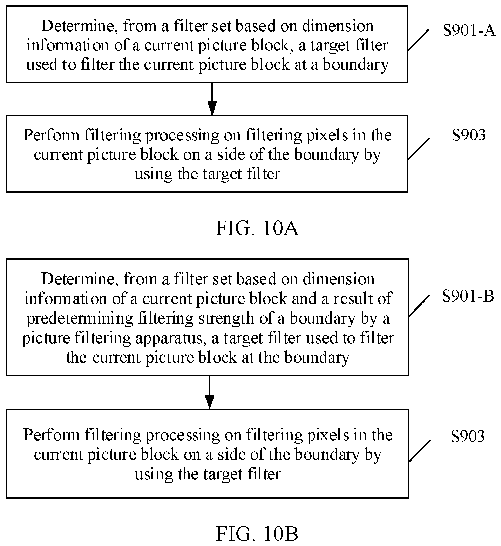

In some embodiments of this application, S901 may include S901-A, as shown in FIG. 10A.

S901-A: Determine, from a filter set based on the dimension information of the current picture block, the target filter used to filter the current picture block at a boundary. S901-A may be specifically implemented in any one of the following manners:

Manner 1: The target filter may be determined through table lookup. Certainly, this application is not limited thereto. Specifically, S901-A may include: determining, based on a correspondence between a plurality of block dimensions and a plurality of filters in the filter set, a filter corresponding to a block dimension of the current picture block. The filter corresponding to the block dimension of the current picture block is the target filter used to filter the current picture block at the boundary.

A specific representation form of the correspondence between a plurality of block dimensions and a plurality of filters in the filter set is not limited in this embodiment of this application, for example, may be a table, a formula, or logical determining (for example, an if else or switch operation) based on a condition.

Optionally, a correspondence between a block dimension and a filter may be a "one-to-one" correspondence. An example in this case may be shown in Table 1.

**Table 1**

| Block dimension (which is also referred to as a one-dimensional block dimension or the width or height of a picture block) | Filter |
|---|---|
| 2 | Filter 1 |
| 4 | Filter 2 |
| ... | ... |
| $2^n$ | Filter n |
| ... | ... |
| $2^N$ | Filter N |

$1 \leq n \leq N$, where both n and N are integers. In a next-generation video coding technology, a range of a block dimension is temporarily defined as [4, 256]. In this case, $2 \leq n \leq 8$. Optionally, a value relationship between filtering strength of the filters in Table 1 is: filtering strength of the filter 1 < filtering strength of the filter 2 ... < filtering strength of the filter n ... < filtering strength of the filter N.

For example, based on Table 1, if the block dimension of the to-be-filtered current picture block is 4, the target filter used to filter the current picture block is the filter 2. If the block dimension of the to-be-filtered current picture block is 128, the target filter used to filter the current picture block is the filter 7.

Optionally, the correspondence between a block dimension and a filter may be a "many-to-one" correspondence, that is, a plurality of block dimensions (which may be specifically a block dimension range) correspond to one filter. An example in this case may be shown in Table 2.

**Table 2**

| Block dimension (or a block dimension range or a width range or a height range of a picture block) | Filter |
|---|---|
| 2 and 4 (a corresponding block dimension range: [2, 4]) | Filter 1 |
| 8, 16, 32, and 64 (a corresponding block dimension range: (8, 64]) | Filter 2 |
| 128, 256 (a corresponding block dimension range: [128, 256]) | Filter 3 |
| ... | Filter M |

M is an integer greater than or equal to 3. Table 2 is merely an example, and does not constitute a limitation to the implementation that the correspondence between a block dimension and a filter is "many-to-one". Optionally, a value relationship between filtering strength of the filters in Table 2 is as follows: filtering strength of the filter 1 < filtering strength of the filter 2, ... < filtering strength of the filter M.

For example, based on Table 2, if the block dimension of the to-be-filtered current picture block is 4, the target filter used to filter the current picture block is the filter 1. If the block dimension of the to-be-filtered current picture block is 128, the target filter used to filter the current picture block is the filter 3.

The following describes specific examples in which the technical solution provided in this manner is applied to FIG. 4, FIG. 7A, and FIG. 7B.

For example, when the technical solution provided in this manner is applied to the video decoding system shown in FIG. 4, the picture filtering apparatus may be specifically a source apparatus 10 and/or a destination apparatus 20. In this case, both the source apparatus 10 and the destination apparatus 20 may store the correspondence (for example, a table) between a plurality of block dimensions and a plurality of filters in the filter set. The video encoder 100 may invoke, in a video encoding process, the correspondence stored in the source apparatus 10, to determine a filter corresponding to the block dimension of the current picture block. The video decoder 200 may invoke, in a video decoding process, the correspondence stored in the destination apparatus 20, to determine the filter corresponding to the block dimension of the current picture block.

For example, when the technical solution provided in this manner is applied to the video encoder 100 shown in FIG. 7A, the picture filtering apparatus may specifically be or be included in the loop filter unit 106. In this case, the video encoder 100 may store the correspondence (for example, a table) between a plurality of block dimensions and a plurality of filters in the filter set. The loop filter unit 106 may invoke the correspondence in a process of performing picture filtering, for example, deblocking filtering, to determine the filter corresponding to the block dimension of the current picture block.

For example, when the technical solution provided in this manner is applied to the video decoder 200 shown in FIG. 7B, the picture filtering apparatus may specifically be or be included in the loop filter unit 206. In this case, the video decoder 200 may store the correspondence (for example, a table) between a plurality of block dimensions and a plurality of filters in the filter set. The loop filter unit 206 may invoke the correspondence in a process of performing picture filtering, for example, deblocking filtering, to determine the filter corresponding to the block dimension of the current picture block.

A specific implementation in which any manner of S901 provided below is applied to the video coding system shown in FIG. 4, the video encoder 100 shown in FIG. 7A, or the video decoder 200 shown in FIG. 7B may be derived from the foregoing description, and therefore, is not described in this specification.

The following describes a specific example in which the technical solution provided in this manner is combined with an implementation of a filter.

If the target filter includes a filtering coefficient, a quantity of source filtering pixels, and a quantity of target filtering pixels, a correspondence between a plurality of block dimensions and a plurality of filters in the filter set shown in Table 1 may be represented as Table 1A:

Table 1A

| Block dimension (which is also referred to as a one-dimensional block dimension or the width or height of a picture block) | Filter |
| --- | --- |
| 2 | Filtering coefficient 1, quantity 1 of source filtering pixels, and quantity 1 of target filtering pixels |
| 4 | Filtering coefficient 2, quantity 2 of source filtering pixels, and quantity 2 of target filtering pixels |
| ... | ... |
| $2^n$ | Filtering coefficient n, quantity n of source filtering pixels, and quantity n of target filtering pixels |
| ... | ... |
| $2^N$ | Filtering coefficient N, quantity N of source filtering pixels, and quantity N of target filtering pixels |

If the target filter includes a filtering coefficient and a quantity of source filtering pixels, a correspondence between a plurality of block dimensions and a plurality of filters in the filter set shown in Table 1 may be represented as Table 1B:

**Table 1B**

| Block dimension (which is also referred to as a one-dimensional block dimension or the width or height of a picture block) | Filter |
| --- | --- |
| 2 | Filtering coefficient 1 and quantity 1 of source filtering pixels |
| 4 | Filtering coefficient 2 and quantity 2 of source filtering pixels |
| ... | ... |
| $2^n$ | Filtering coefficient n and quantity n of source filtering pixels |
| ... | ... |
| $2^N$ | Filtering coefficient N and quantity N of source filtering pixels |

An embodiment in which another implementation of a filter is combined with the technical solution shown in Table 1, and an embodiment in which any implementation of a filter is combined with the technical solution shown in Table 2 (or any implementation of S901 provided below) are not described one by one in this specification. It may be understood that, when included technical features do not contradict each other in principle, any two embodiments provided in this specification may be combined to constitute a new embodiment.

Manner 2: Determine a target filter through a comparison with a threshold. Specifically, the manner 2 may be implemented by the manner 2A or manner 2B.

Manner 2A: If a block dimension of the current picture block is greater than or equal to a first threshold, determine that a first filter in the filter set is the target filter used to filter the current picture block at the boundary; or if a block dimension of the current picture block is less than a first threshold, determine that a second filter in the filter set is the target filter used to filter the current picture block at the boundary, where filtering strength of the first filter is greater than the filtering strength of the second filter. In this way, a larger block dimension can indicate stronger strength of a filter.

Manner 2B: If a block dimension of the current picture block is greater than or equal to a first threshold, determine that a first filter in the filter set is the target filter used to filter the current picture block at the boundary; if a block dimension of the current picture block is less than a second threshold, determine that a second filter in the filter set is the target filter used to filter the current picture block at the boundary; or when the first threshold is greater than the second threshold, if a block dimension of the current picture block is less than a first threshold and greater than or equal to a second threshold, determine that a third filter in the filter set is the target filter used to filter the current picture block at the boundary, where filtering strength of the third filter is less than the filtering strength of the first filter and greater than the filtering strength of the second filter, the first threshold is greater than or equal to the second threshold, and filtering strength of the first filter is greater than the filtering strength of the second filter. In this way, a larger block dimension can indicate stronger strength of a filter. In this way, a larger block dimension can indicate stronger strength of a filter.

In some other embodiments of this application, S901 may include S901-B, as shown in FIG. 10B.

S901-B: Determine, from the filter set based on the dimension information of the current picture block and a result of predetermining filtering strength of the boundary by the picture filtering apparatus, the target filter used to filter the current picture block at the boundary.

In an example, the picture filtering apparatus may prestore several predetermining results of filtering strength of the boundary, and then predetermines filtering strength of a specific boundary according to a specific method in a filtering process, to determine that a predetermining result of performing the predetermining this time is one of the several preset predetermining results. A quantity of preset predetermining results and a specific implementation method for performing predetermining in a filtering process are not limited in this embodiment of this application. For example, there may be two preset predetermining results that are respectively corresponding to "strong filtering" and "weak filtering" described in the H.265 standard or the H.264 standard. In this case, a specific implementation method for predetermining filtering strength of a boundary may be a specific implementation for determining whether filtering strength of a boundary is "strong filtering" or "weak filtering" as described in the H.265 standard or the H.264 standard. Certainly, this application is not limited thereto. In principle, any method for predetermining filtering strength of a boundary is applicable to this application.

For example, in the H.265 standard, for each boundary, if pixels, neighboring the boundary, in picture blocks on two sides of the boundary meet the following three formulas, it is determined that a predetermining result of filtering strength of the boundary is strong filtering; otherwise, it is determined that a predetermining result of filtering strength of the boundary is weak filtering:

$$\left| p_{2,i} - 2p_{1,i} + p_{0,i} \right| + \left| q_{2,i} - 2q_{1,i} + q_{0,i} \right| < \beta / 8$$

$$\left| p_{3,i} - p_{0,i} \right| + \left| q_{0,i} - q_{3,i} \right| < \beta / 8$$

$$\left| p_{0,i} - q_{0,i} \right| < 2.5 t_c$$

i = 0,1,2,3

$p_{0,i}$, $p_{1,i}$, $p_{2,i}$, $p_{3,i}$, $q_{0,i}$, $q_{1,i}$, $q_{2,i}$, $q_{3,i}$ respectively represent values of pixels in picture blocks on two sides of the boundary. For example, if sizes of picture blocks on the two sides of the boundary are all 8x8, a position relationship between $p_{0,i}$, $p_{1,i}$, $p_{2,i}$, $p_{3,i}$, $q_{0,i}$, $q_{1,i}$, $q_{2,i}$, $q_{3,i}$, and the boundary may be shown in FIG. 1. $\beta$ and $t_c$ are thresholds specified in the standard (that is, thresholds related to a degree of picture flatness).

S901-B may be implemented in any one of the following manners:

Manner 1: The target filter may be determined through table lookup. Certainly, this application is not limited thereto. Manner 1 may be implemented in the manner 1A or manner 1B:

Manner 1A: Determine, based on a correspondence between a plurality of block dimensions and a plurality of filters in a first filter set, a filter corresponding to a block dimension of the current picture block, where the filter corresponding to the block dimension of the current picture block is the target filter used to filter the current picture block at the boundary, and the first filter set is a filter set that corresponds to the predetermining result of the filtering strength of the boundary in a plurality of filter sets.

Each filter set may include at least two filters. For related description of the plurality of block dimensions and a plurality of filters in any filter set (for example, the first filter set), refer to the foregoing description. An implementation of determining the first filter set may include: determining, based on a correspondence between a plurality of filter sets and a plurality of predetermining results of filtering strength of a boundary, a filter set corresponding to the predetermining result of the filtering strength of the boundary. The filter set corresponding to the predetermining result of the filtering strength of the boundary is the first filter set.

A specific representation form of the correspondence between a plurality of filter sets and a plurality of predetermining results of the filtering strength of the boundary, and a specific representation form of a correspondence between each filter in each filter set and a plurality of block dimensions are not limited in this embodiment of this application, for example, may be a table, a formula, or logical determining based on a condition (for example, an if else or switch operation). An example representing the two correspondences may be shown in Table 3:

**Table 3**

| Predetermining result of filtering strength | Filter set | Filter | Block dimension |
|---|---|---|---|
| Predetermining result 1 (for example, "strong filtering" in the H.265 standard) | Filter set 1 | Filter 11 | Block dimension 1 |
| | | Filter 12 | Block |
| Predetermining result of filtering strength | Filter set | Filter | Block dimension |
| | | | dimension 2 |
| | | Filter 13 | Block dimension 3 |
| Predetermining result 2 (for example, "weak filtering" in the H.265 standard) | Filter set 2 | Filter 21 | Block dimensions 1 and 2 |
| | | Filter 22 | Block dimension 3 |

For example, based on Table 3, if a predetermining result of the filtering strength of the boundary is the predetermining result 1, the first filter set is the filter set 1; if the block dimension of the current picture block is the block dimension 2, the determined target filter used to filter the current picture block at the boundary is the filter 12.

Manner 1B: Determine, based on a correspondence between a plurality of block dimensions and a plurality of filter sets, a second filter set corresponding to a block dimension of the to-be-filtered current picture block, where the second filter set includes a plurality of filters corresponding to different filtering strength; and determining, from the second filter set, a filter corresponding to the predetermining result of the filtering strength of the boundary, where the filter corresponding to the predetermining result of the filtering strength of the boundary is the target filter used to filter the current picture block at the boundary.

Each filter set (for example, the second filter set) may include at least two filters. A correspondence between a block dimension and a filter set may be a "one-to-one" correspondence, or may be a "many-to-one" correspondence. The determining, from the second filter set, a filter corresponding to the result of predetermining the filtering strength of the boundary may include: determining, based on a correspondence between a plurality of predetermining results of filtering strength of the boundary and a plurality of filters in the second filter set, the filter corresponding to the predetermining result of the filtering strength of the boundary.

A specific representation form of the correspondence between a plurality of block dimensions and a plurality of filter sets, and a specific representation form of the correspondence between a plurality of predetermining results of filtering strength of the boundary and each filter set are not limited in this embodiment of this application, for example, may be a table, a formula, or logical determining based on a condition (for example, an if else or switch operation). An example representing the two correspondences may be shown in Table 4:

**Table 4**

| Block dimension (which is also referred to as a one-dimensional block dimension or the width or height of a picture block) | Filter set | Filter | Result of predetermining filtering strength by a filter |
|---|---|---|---|
| Block dimensions 1 and 2 | Filter set 1 | Filter 11 | Predetermining result 1 (for example, "strong filtering" in the H.265 standard) |
| | | Filter 12 | Predetermining result 2 (for example, "weak filtering" in the H.265 standard) |
| Block dimension 3 | Filter set 2 | Filter 21 | Predetermining result 1 of filtering strength |
| | | Filter 22 | Predetermining result 2 of filtering strength |
| Block dimension 4 | Filter set 3 | Filter 31 | Predetermining result 1 of filtering strength |
| | | Filter 32 | Predetermining result 2 of filtering strength |

For example, based on Table 4, if the block dimension of the current picture block is the block dimension 2, the determined second filter set is the filter set 1; if the predetermining result of the filtering strength of the boundary is the predetermining result 1, the determined target filter used to filter the current picture block at the boundary is the filter 11.

Manner 2: Perform a comparison with a threshold. Manner 2 may be implemented in one of the following manners.

Manner 2A-1: If a block dimension of the current picture block is greater than or equal to a third threshold, determine that a fourth filter in a third filter set is the target filter used to filter the current picture block at the boundary; or if a block dimension of the current picture block is less than the third threshold, determine that a fifth filter in the third filter set is the target filter used to filter the current picture block at the boundary. Filtering strength of the fourth filter is greater than filtering strength of the fifth filter, the third filter set is a filter set that corresponds to the predetermining result of the filtering strength of the boundary in a plurality of filter sets.

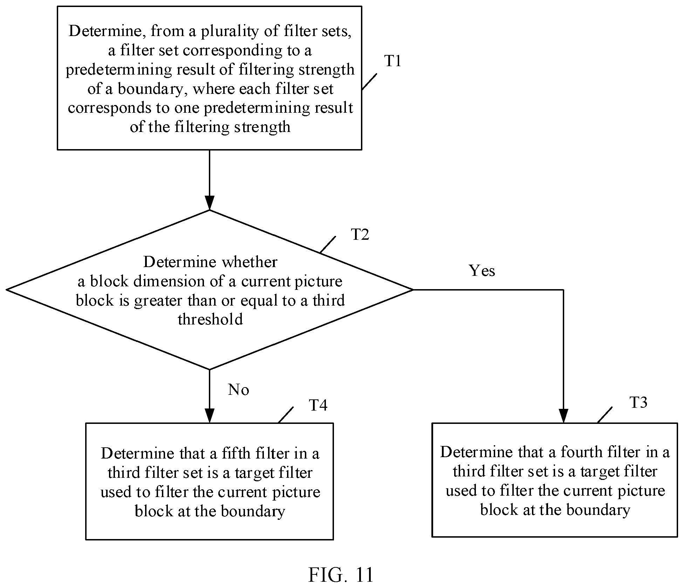

FIG. 11 is a schematic flowchart of a specific implementation of manner 2A-1. The manner 2A-1 may include the following steps.

T1: Determine, from the plurality of filter sets, a filter set corresponding to a predetermining result of the filtering strength of the boundary, where each filter set corresponds to one predetermining result of filtering strength.

For example, a correspondence between a plurality of filter sets and a plurality of predetermining results of filtering strength may be represented as Table 5 below.

**Table 5**

| Predetermining result of filtering strength | Filter set |
|---|---|
| Predetermining result 1 of filtering strength (for example, "strong filtering" in the H.265 standard) | Filter set 1 |
| Predetermining result 2 of filtering strength (for example, "weak filtering" in the H.265 standard) | Filter set 2 |

Based on Table 4, if the predetermining result of the filtering strength of the boundary is the predetermining result 1, the third filter set is the filter set 1; if the predetermining result of the filtering strength of the boundary is the predetermining result 2, the third filter set is the filter set 2.

T2: Determine whether a block dimension of the current picture block is greater than or equal to a third threshold.

If the block dimension of the current picture block is greater than or equal to the third threshold, T3 is performed, or if the block dimension of the current picture block is not greater than or equal to the third threshold, T4 is performed.

T3: Determine that a fourth filter in the third filter set is the target filter used to filter the current picture block at the boundary. After T3 is performed, the process ends.

T4: Determine that a fifth filter in the third filter set is the target filter used to filter the current picture block at the boundary. After T4 is performed, the process ends.

Manner 2A-2: If a block dimension of the current picture block is greater than or equal to a third threshold, determine that a fourth filter in a third filter set is the target filter used to filter the current picture block at the boundary; and if the block dimension of the current picture block is less than a fourth threshold, determine that a fifth filter in the third filter set is the target filter used to filter the current picture block at the boundary; or if a block dimension of the current picture block is less than the third threshold and greater than or equal to the fourth threshold, determine that a sixth filter in the third filter set is the target filter used to filter the current picture block at the boundary. The third threshold is greater than or equal to the fourth threshold, filtering strength of the fourth filter is greater than filtering strength of the fifth filter, filtering strength of the sixth filter is less than the filtering strength of the fourth filter and greater than the filtering strength of the fifth filter, and the third filter set is a filter set in the plurality of filter sets that corresponds to the predetermining result of the filtering strength of the boundary.

A schematic flowchart of a specific implementation of the manner 2A-2 may be derived based on FIG. 11, and details are not described herein.

Manner 2B-1: If a block dimension of the current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; or if a block dimension of the current picture block is less than a fifth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary. Filtering strength of the target filter in the fourth filter set is greater than filtering strength of the target filter in the fifth filter set.

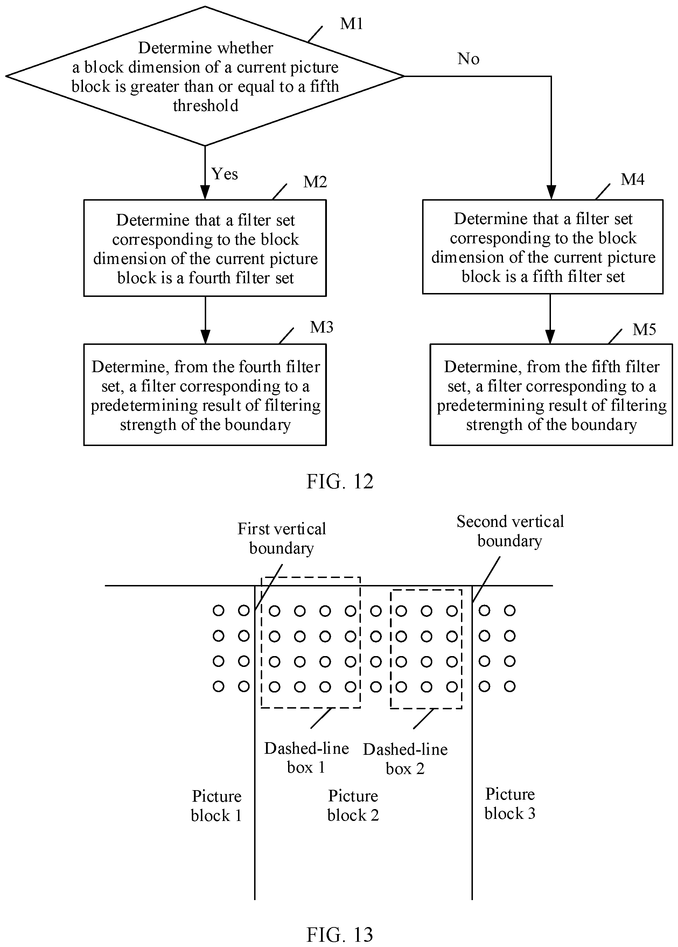

FIG. 12 is a schematic flowchart of a specific implementation of manner 2B-1. The manner 2B-1 may include the following steps:

M1: Determine whether a block dimension of the current picture block is greater than or equal to a fifth threshold. If the block dimension of the current picture block is greater than or equal to the fifth threshold, M2 is performed. If the block dimension of the current picture block is not greater than or equal to the fifth threshold, M4 is performed.
M2: Determine that a filter set corresponding to the block dimension of the current picture block is the fourth filter set.
M3: Determine, from the fourth filter set, a filter corresponding to the predetermining result of the filtering strength of the boundary. After M3 is performed, the process ends.
M4: Determine that a filter set corresponding to the block dimension of the current picture block is a fifth filter set.
M5: Determine, from the fifth filter set, a filter corresponding to the predetermining result of the filtering strength of the boundary. After M5 is performed, the process ends.

Manner 2B-2: If a block dimension of the to-be-filtered current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; and if the block dimension of the to-be-filtered current picture block is less than a sixth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary; or if the fifth threshold is greater than the sixth threshold, determine that a filter set corresponding to the block dimension of the current picture block is a sixth filter set, where the sixth filter set includes a plurality of filters corresponding to different filtering strength; and determine, from the sixth filter set, a filter corresponding to the predetermining result of the filtering strength of the boundary, where the filter corresponding to the predetermining result of the filtering strength of the boundary is the target filter used to filter the current picture block at the boundary. The fifth threshold is greater than or equal to the sixth threshold, filtering strength of the target filter in the fourth filter set is greater than filtering strength of the target filter in the fifth filter set, and filtering strength of the target filter in the sixth filter set is less than the filtering strength of the target filter in the fourth filter set and greater than the filtering strength of the target filter in the fifth filter set.

A schematic flowchart of a specific implementation of the manner 2B-2 may be derived based on FIG. 12, and details are not described herein.

It should be noted that any one of the foregoing thresholds (for example, any one of the first threshold to the sixth threshold) may be a default value agreed on in a standard, or may be transmitted based on a stream. For example, indication information may be added to sequence-level header information, picture-level header information, slice header (slice header), or stream information of a block to indicate a threshold used in a filtering process of a current sequence, a current picture, a current slice (slice), or a current block. For example, the threshold may be carried in any one of a sequence parameter set (sequence parameter set, SPS), a picture parameter set (picture parameter set, PPS), or a slice header of the current picture block.

In the foregoing description of the specific implementation of S903-B, description is provided by using an example in which the target filter used to filter the current picture block is determined based on one boundary (for example, one vertical boundary or one horizontal boundary). The following describes a specific implementation of determining, based on two vertical boundaries or two horizontal boundaries, a target filter used to filter a current picture block.

In some embodiments of this application, the neighboring picture block of the current picture block includes a first neighboring picture block and a second neighboring picture block, and the boundary includes a first boundary between the current picture block and the first neighboring picture block and a second boundary between the current picture block and the second neighboring picture block. Both the first neighboring picture block and the second neighboring picture block are picture blocks adjacent to the current picture. In addition, the first neighboring picture block is different from the second neighboring picture block. In this case, S903-B may include:

determining, from the filter set based on the dimension information of the current picture block and a first result of predetermining filtering strength of the first boundary by the picture filtering apparatus, a third target filter used to filter the current picture block at the first boundary; and determining, from the filter set based on the dimension information of the current picture block and a second result of predetermining filtering strength of the second boundary by the picture filtering apparatus, a fourth target filter used to filter the current picture block at the second boundary, where both the first boundary and the second boundary are vertical boundaries, and a sum of a quantity of target filtering pixels that is included in attributes of the third target filter and a quantity of target filtering pixels that is included in attributes of the fourth target filter is less than or equal to the width of the current picture block; or both the first boundary and the second boundary are horizontal boundaries, and a sum of a quantity of target filtering pixels that is included in attributes of the third target filter and a quantity of target filtering pixels that is included in attributes of the fourth target filter is less than or equal to the height of the current picture block.

It should be noted that, in this embodiment, a sum of target filtering pixels included in attributes of two filters determined based on two mutually parallel boundaries (for example, two vertical boundaries or two horizontal boundaries) of the current picture block is less than or equal to a quantity of pixels included in a row/column of pixels perpendicular to the two boundaries; in this case, it can be ensured that each pixel in the current picture block is filtered a maximum of once. Therefore, repeated filtering can be avoided, thereby reducing calculation complexity.

For example, as shown in FIG. 13, if the current picture block is the picture block 2 in FIG. 13, and the picture block 2 is an 8x8 pixel array (not all pixels are shown in FIG. 13), a first vertical boundary exists between the current picture block and the first neighboring picture block (that is, the picture block 1), and a second vertical boundary exists between the current picture block and a second neighboring picture block (that is, the picture block 3). In this case, in this embodiment, if one row in the current picture block includes eight pixels, based on the method provided in this embodiment, it is determined that attributes of the target filter 1 used to filter the current picture block (that is, the picture block 2) at the first vertical boundary may include four target filtering pixels (for example, pixels included in each row in a dashed-line block 1), and that attributes of the target filter 2 used to filter the current picture block at the second vertical boundary may include three target filtering pixels (for example, pixels included in each row in a dashed-line block 2). In this way, it is ensured that each pixel in a row of pixels is filtered a maximum of once.

The foregoing mainly describes the solutions provided in the embodiments of this application from a perspective of the method. To implement the foregoing functions, the apparatus includes corresponding hardware structures and/or software modules for performing the functions. A person skilled in the art should be easily aware that, in combination with units and algorithm steps of the examples described in the embodiments disclosed in this specification, this application can be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, division into functional modules may be performed on the picture filtering apparatus based on the foregoing method examples. For example, division into the functional modules may be performed in correspondence to functions, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

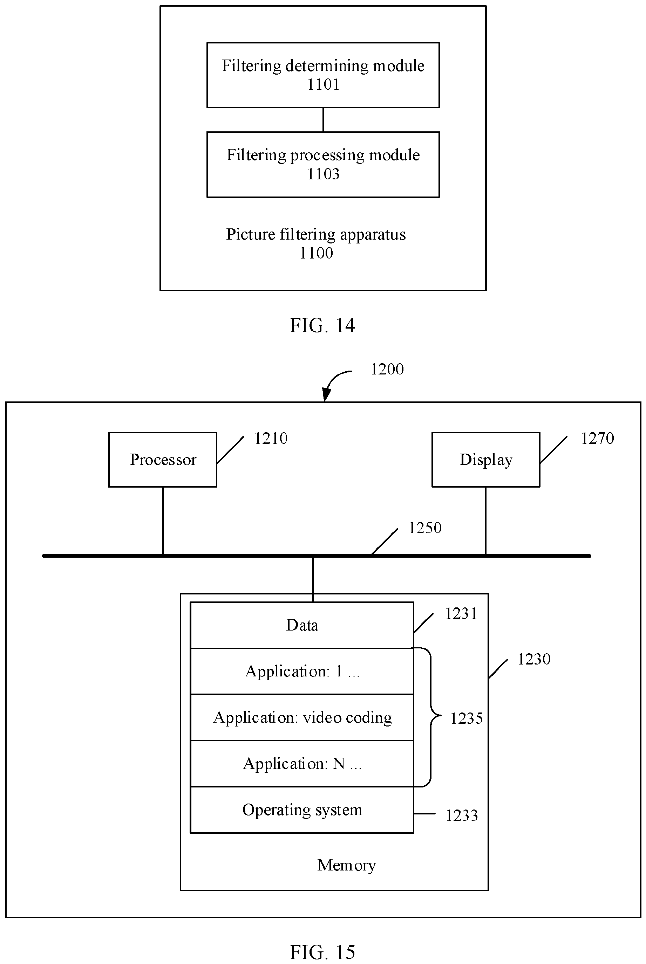

FIG. 14 is a schematic block diagram of a picture filtering apparatus 1100 according to an embodiment of this application. It should be noted that the picture filtering apparatus 1100 may correspond to the loop filter unit 106 in FIG. 7A or a deblocking filter (which is not shown in the figure) in the loop filter unit 106 in FIG. 7A, or may correspond to the loop filter unit 206 in FIG. 7B or a deblocking filter (which is not shown in the figure) in the loop filter unit 206 in FIG. 7B. The picture filtering apparatus 1100 may include a filtering determining module 1101 and a filtering processing module 1103.

In a feasible implementation, the filtering determining module 1101 is configured to determine, based on dimension information of a to-be-filtered current picture block, a target filter used to filter the current picture block, where the dimension information includes the width or height of the current picture block. The filtering processing module 1103 is configured to perform filtering processing on the current picture block by using the target filter. For example, with reference to FIG. 8, the filtering determining module 1101 may be specifically configured to perform S801, and the filtering processing module 1103 may be configured to perform S803.

In a feasible implementation, the filtering determining module 1101 may be specifically configured to determine, from a filter set based on the dimension information of the current picture block, the target filter used to filter the current picture block at a boundary, where the boundary is a boundary between the current picture block and a neighboring picture block of the current picture block. In this case, the filtering processing module 1103 may be specifically configured to perform, by using the target filter, filtering processing on filtering pixels in the current picture block that neighbor to the boundary. For example, with reference to FIG. 10A, the filtering determining module 1101 may be specifically configured to perform S901-A, and the filtering processing module 1103 may be specifically configured to perform S903.

In a feasible implementation, the filtering processing module 1103 may be specifically configured to:

if attributes of the target filter include a filtering coefficient, a quantity of source filtering pixels, and a quantity of target filtering pixels, perform filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels;

if attributes of the target filter include a filtering coefficient and a quantity of source filtering pixels, perform filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to the quantity of source filtering pixels;

if attributes of the target filter include a filtering coefficient and a quantity of target filtering pixels, perform filtering processing on filtering pixels in the current picture block based on the filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels;

if attributes of the target filter include a filtering coefficient, perform filtering processing on filtering pixels in the current picture block based on the filtering coefficient and filtering pixels on two sides of the boundary, where the filtering pixels in the current picture block neighbor to the boundary and correspond to a preset quantity of target filtering pixels, and the filtering pixels on the two sides of the boundary correspond to a preset quantity of source filtering pixels;

if attributes of the target filter include a quantity of source filtering pixels and a quantity of target filtering pixels, perform filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to the quantity of source filtering pixels;

if attributes of the target filter include a quantity of source filtering pixels, perform filtering processing on filtering pixels in the current picture block based on a preset filtering coefficient and filtering pixels on two sides of the boundary, where the pixels in the current picture block neighbor to the boundary and correspond to a preset quantity of target filtering pixels, and the filtering pixels on the two sides of the boundary correspond to the quantity of source filtering pixels; or

if attributes of the target filter include a quantity of target filtering pixels, perform filtering processing on filtering pixels in the current picture block based on a preset filtering coefficient and filtering pixels on two sides of the boundary, where the filtering pixels in the current picture block neighbor to the boundary and correspond to the quantity of target filtering pixels, and the filtering pixels on the two sides of the boundary correspond to a preset quantity of source filtering pixels.

In a feasible implementation, that the filtering processing module 1103 may be specifically configured to perform filtering processing on filtering pixels in the current picture block that neighbor to the boundary includes: performing, by using the target filter, filtering processing on the filtering pixels in the current picture block that neighbor to the boundary;

and performing filtering processing on filtering pixels in the neighboring picture block that neighbor to the boundary.

In a feasible implementation, the filtering determining module 1101 may be further configured to determine, from the filter set based on dimension information of the neighboring picture block, a second target filter used to filter the neighboring picture block at the boundary; and the filtering processing module 1103 may be specifically configured to: perform, by using the target filter, filtering processing on the filtering pixels in the current picture block that neighbor to the boundary; and perform, by using the second target filter, filtering processing on filtering pixels in the neighboring picture block that neighbor to the boundary, where filtering strength of the target filter is different from filtering strength of the second target filter.

In a feasible implementation, the filtering determining module 1101 may be specifically configured to determine, based on a correspondence between a plurality of block dimensions and a plurality of filters in the filter set, a filter corresponding to a block dimension of the current picture block. The filter corresponding to the block dimension of the current picture block is the target filter used to filter the current picture block at the boundary, and the block dimension of the current picture block is the width or height of the current picture block.

In a feasible implementation, the filtering determining module 1101 may be specifically configured to: if a block dimension of the current picture block is greater than or equal to a first threshold, determine that a first filter in the filter set is the target filter used to filter the current picture block at the boundary; or if a block dimension of the current picture block is less than a first threshold, determine that a second filter in the filter set is the target filter used to filter the current picture block at the boundary, where filtering strength of the first filter is greater than filtering strength of the second filter, and the block dimension of the current picture block is the width or height of the current picture block.

In a feasible implementation, the filtering determining module 1101 may be specifically configured to: if a block dimension of the current picture block is greater than or equal to a first threshold, determine that a first filter in the filter set is the target filter used to filter the current picture block at the boundary; if a block dimension of the current picture block is less than a second threshold, determine that a second filter in the filter set is the target filter used to filter the current picture block at the boundary; or if a block dimension of the current picture block is less than a first threshold and greater than or equal to a second threshold, determine that a third filter in a filter set is the target filter used to filter the current picture block at the boundary. The first threshold is greater than the second threshold, filtering strength of the first filter is greater than filtering strength of the second filter, filtering strength of the third filter is less than the filtering strength of the first filter and greater than the filtering strength of the second filter, and the block dimension of the current picture block is the width or height of the current picture block.

In a feasible implementation, the filtering determining module 1101 may be specifically configured to determine, from the filter set based on the dimension information of the current picture block and a result of predetermining filtering strength of the boundary by the picture filtering apparatus, the target filter used to filter the current picture block at the boundary. For example, with reference to FIG. 10B, the filtering determining module 1101 may be specifically configured to perform S901-B.

In a feasible implementation, the neighboring picture block of the current picture block includes a first neighboring picture block and a second neighboring picture block, and the boundary includes a first boundary between the current picture block and the first neighboring picture block and a second boundary between the current picture block and the second neighboring picture block. In this case, the filtering determining module 1101 may be specifically configured to: determine, from the filter set based on the dimension information of the current picture block and a first result of predetermining filtering strength of the first boundary by the picture filtering apparatus, a third target filter used to filter the current picture block at the first boundary; and determine, from the filter set based on the dimension information of the current picture block and a second result of predetermining filtering strength of the second boundary by the picture filtering apparatus, a fourth target filter used to filter the current picture block at the second boundary. Both the first boundary and the second boundary are vertical boundaries, and a sum of a quantity of target filtering pixels that is included in attributes of the third target filter and a quantity of target filtering pixels that is included in attributes of the fourth target filter is less than or equal to the width of the current picture block; or both the first boundary and the second boundary are horizontal boundaries, and a sum of a quantity of target filtering pixels that is included in attributes of the third target filter and a quantity of target filtering pixels that is included in attributes of the fourth target filter is less than or equal to the height of the current picture block.

In a feasible implementation, the filtering determining module 1101 may be specifically configured to determine, based on a correspondence between a plurality of block dimensions and a plurality of filters in a first filter set, a filter corresponding to a block dimension of the current picture block. The filter corresponding to the block dimension of the current picture block is the target filter used to filter the current picture block at the boundary, the first filter set is a filter set that corresponds to the predetermining result of the filtering strength of the boundary in a plurality of filter sets. The block dimension of the current picture block is the width or height of the current picture block.

In a feasible implementation, the filtering determining module 1101 may be specifically configured to: determine, based on a correspondence between a plurality of block dimensions and a plurality of filter sets, a second filter set corresponding to a block dimension of the current picture block, where the second filter set includes a plurality of filters corresponding to different filtering strength; and determine, from the second filter set, a filter corresponding to the predetermining result of the filtering strength of the boundary, where the filter corresponding to the predetermining result of the filtering strength of the boundary is the target filter used to filter the current picture block at the boundary. The block dimension of the current picture block is the width or height of the current picture block.

In a feasible implementation, the filtering determining module 1101 may be specifically configured to: if a block dimension of the current picture block is greater than or equal to a third threshold, determine that a fourth filter in a third filter set is the target filter used to filter the current picture block at the boundary; and if the block dimension of the current picture block is less than the third threshold, determine that a fifth filter in the third filter set is the target filter used to filter the current picture block at the boundary. Filtering strength of the fourth filter is greater than filtering strength of the fifth filter, the third filter set is a filter set that corresponds to the predetermining result of the filtering strength of the boundary in a plurality of filter sets, and the block dimension of the current picture block is the width or height of the current picture block.

In a feasible implementation, the filtering determining module 1101 may be specifically configured to: if a block dimension of the current picture block is greater than or equal to a third threshold, determine that a fourth filter in a third filter set is the target filter used to filter the current picture block at the boundary; and if the block dimension of the current picture block is less than a fourth threshold, determine that a fifth filter in the third filter set is the target filter used to filter the current picture block at the boundary; or if a block dimension of the current picture block is less than the third threshold and greater than or equal to the fourth threshold, determine that a sixth filter in the third filter set is the target filter used to filter the current picture block at the boundary. The third threshold is greater than the fourth threshold, filtering strength of the fourth filter is greater than filtering strength of the fifth filter, filtering strength of the sixth filter is less than the filtering strength of the fourth filter and greater than the filtering strength of the fifth filter, the third filter set is a filter set in the plurality of filter sets that corresponds to the predetermining result of the filtering strength of the boundary, and the block dimension of the current picture block is the width or height of the current picture block.

In a feasible implementation, the filtering determining module 1101 may be specifically configured to: if a block dimension of the current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; or if a block dimension of the current picture block is less than the fifth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary. Filtering strength of the target filter in the fourth filter set is greater than filtering strength of the target filter in the fifth filter set, and the block dimension of the current picture block is the width or height of the current picture block.

In a feasible implementation, the filtering determining module 1101 may be specifically configured to: if a block dimension of the to-be-filtered current picture block is greater than or equal to a fifth threshold, determine that a filter set corresponding to the block dimension of the current picture block is a fourth filter set, where the fourth filter set includes a plurality of filters corresponding to different filtering strength; and determine, from the fourth filter set, a filter corresponding to the predetermining result of the filtering strength of the boundary, where the filter corresponding to the predetermining result of the filtering strength of the boundary is the target filter used to filter the current picture block at the boundary; and if the block dimension of the to-be-filtered current picture block is less than a sixth threshold, determine that a filter set corresponding to the block dimension of the current picture block is a fifth filter set, where the fifth filter set includes a plurality of filters corresponding to different filtering strength; and determine, from the fifth filter set, a filter corresponding to the predetermining result of the filtering strength of the boundary, where the filter corresponding to the predetermining result of the filtering strength of the boundary is the target filter used to filter the current picture block at the boundary; or if a block dimension of the to-be-filtered current picture block is less than the fifth threshold and greater than or equal to the sixth threshold, determine that a filter set corresponding to the block dimension of the current picture block is a sixth filter set, where the sixth filter set includes a plurality of filters corresponding to different filtering strength; and determine, from the sixth filter set, a filter corresponding to the predetermining result of the filtering strength of the boundary, where the filter corresponding to the predetermining result of the filtering strength of the boundary is the target filter used to filter the current picture block at the boundary. The fifth threshold is greater than the sixth threshold, filtering strength of the target filter in the fourth filter set is greater than filtering strength of the target filter in the fifth filter set, filtering strength of the target filter in the sixth filter set is less than the filtering strength of the target filter in the fourth filter set and greater than the filtering strength of the target filter in the fifth filter set, and the block dimension of the current picture block is the width or height of the current picture block.

In a feasible implementation, the neighboring picture block of the current picture block includes a third neighboring picture block and a fourth neighboring picture block, and the boundary includes a third boundary between the current picture block and the third neighboring picture block and a fourth boundary between the current picture block and the fourth neighboring picture block. The third boundary is a vertical boundary, and the fourth boundary is a horizontal boundary. In this case, the filtering determining module 1101 may be specifically configured to: determine, from the filter set based on the width of the current picture block through table lookup or a comparison with a threshold, a target filter used to filter the current picture block at the third boundary, where the width of the current picture block is greater than or equal to a preset value, and the preset value herein is, for example, 8; and determine, from the filter set based on the height of the current picture block through table lookup or a comparison with a threshold, a target filter used to filter the current picture block at the fourth boundary, where the height of the current picture block is greater than or equal to the preset value, and the preset value herein is, for example, 8.

In a feasible implementation, the filtering determining module 1101 is configured to: if a block dimension of a current picture block is greater than or equal to a first threshold, determine that a first filter is a target filter used to filter the current picture block at a boundary, where the boundary is a boundary between the current picture block and a neighboring picture block of the current picture block; or if a block dimension of the current picture block is less than the first threshold, determine that a second filter is a target filter used to filter the current picture block at the boundary, where filtering strength of the first filter is greater than filtering strength of the second filter, and a block dimension of the current picture block is the width or height of the current picture block. The filtering processing module 1102 is configured to perform filtering processing on the current picture block by using the target filter. Optionally, the first threshold is $2^n$, where $2 \leq n \leq 8$.

It may be understood that the modules of the picture filtering apparatus in this embodiment of this application are various functional entities that perform the steps included in the picture filtering method in this application, that is, functional entities that can implement all the steps in the picture filtering method in this application and extension and variants of these steps. For details, refer to the description of the picture filtering method in this specification. For brevity, details are not described in this specification.

FIG. 15 is a schematic block diagram of an implementation of an encoding device or a decoding device (referred to as a coding device 1200 for short) according to an embodiment of this application. The coding device 1200 may include a processor 1210, a memory 1230, and a bus system 1250. The processor 1210 is connected to the memory 1230 through the bus system 1250. The memory 1230 is configured to store an instruction, and the processor 1210 is configured to execute the instruction stored in the memory 1230, to perform various video encoding or decoding methods described in this application, and in particular a method for filtering a current picture block based on a block dimension of the current picture block. To avoid repetition, details are not described herein again.

In this embodiment of this application, the processor 1210 may be a central processing unit (central processing unit, CPU), or the processor 1210 may be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The memory 1230 may include a ROM device or a RAM device. Any other proper type of storage device may also be used as the memory 1230. The memory 1230 may include code and data 1231 that are accessed by the processor 1210 by using the bus 1250. The memory 1230 may further include an operating system 1233 and an application program 1235. The application program 1235 includes at least one program that allows the processor 1210 to perform the video encoding or decoding method described in this application (in particular the method for filtering the current picture block based on the block dimension of the current picture block described in this application). For example, the application program 1235 may include applications 1 to N, and further includes a video encoding or decoding application (video coding application for short) that performs the video encoding or decoding method described in this application.

In addition to including a data bus, the bus system 1250 may further include a power bus, a control bus, a status signal bus, and the like. However, for clear description, various types of buses in the figure are marked as the bus system 1250.

Optionally, the coding device 1200 may further include one or more output devices, for example, a display 1270. In an example, the display 1270 may be a touch display that combines a display and a touch unit that operably senses touch input. The display 1270 may be connected to the processor 1210 by using the bus 1250.

A person skilled in the art can understand that, the functions described with reference to various illustrative logical blocks, modules, and algorithm steps disclosed and described in this specification can be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or a communications medium including any medium that facilitates transfer of a computer program from one place to another (for example, according to a communications protocol). In this manner, the computer-readable medium may be generally corresponding to: (1) a non-transitory tangible computer-readable storage medium, or (2) a communications medium such as a signal or a carrier. The data storage medium may be any available medium that can be accessed by one or more computers or one or more processors to retrieve instructions, code, and/or data structures for implementing the techniques described in this application. A computer program product may include a computer-readable medium.

By way of example and not by way of limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of an instruction or a data structure and that can be accessed by a computer. In addition, any connection is properly termed a computer-readable medium. For example, if an instruction is transmitted from a website, a server, or another remote source through a coaxial cable, an optical fiber, a twisted pair, or a digital subscriber line (DSL), or wireless technologies such as infrared, radio, and microwave, the coaxial cable, fiber optic cable, twisted pair, DSL, or wireless technologies such as infrared, radio, and microwave are included in a definition of a medium. However, it should be understood that the computer-readable storage medium and the data storage medium do not include connections, carriers, signals, or other transitory media, but actually mean non-transitory tangible storage media. Disk and disc, as used herein, include a compact disc (CD), a laser disc, an optical disc, a DVD, and a Blu-ray disc, where the disk usually reproduces data magnetically, while the disc reproduces data optically with lasers. Combinations of the foregoing should also be included in the scope of the computer-readable media.

An instruction may be executed by one or more processors such as one or more digital signal processors (DSP), general purpose microprocessors, application-specific integrated circuits (ASIC), field programmable gate arrays (FPGA), or other equivalent integrated or discrete logic circuits. Therefore, the term "processor" used in this specification may refer to any of the foregoing structures or any other structure suitable for implementing the technologies described in this specification. In addition, in some aspects, the functions described with reference to the various illustrative logical blocks, modules, and steps described in this specification may be provided in dedicated hardware and/or software modules configured for encoding and decoding, or may be incorporated into a combined codec. In addition, all of the technologies may be implemented in one or more circuits or logic elements. In an example, various illustrative logical blocks, units, and modules in the video encoder 100 and the video decoder 200 may be understood as corresponding circuit devices or logical elements.

The technologies in this application may be implemented in various apparatuses or devices, including a wireless handset, an integrated circuit (IC), or a set of ICs (for example, a chip set). Various components, modules, or units are described in this application to emphasize functional aspects of the apparatuses configured to perform the disclosed technologies, but are not necessarily implemented by different hardware units. Actually, as described above, various units may be combined, in combination with proper software and/or firmware, into a codec hardware unit, or be provided by interoperable hardware units (including one or more processors described above).

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture filtering method, wherein the method is applied to a picture filtering apparatus, and the method comprises:

    determining, based on dimension information of a to-be-filtered current picture block, a target filter used to filter the current picture block, wherein the dimension information comprises a width or a height of the current picture block; and
    performing filtering processing on the current picture block by using the target filter.

2. The method according to claim 1, wherein the determining, based on dimension information of a to-be-filtered current picture block, a target filter used to filter the current picture block comprises:

    determining, from a filter set based on the dimension information of the current picture block, the target filter used to filter the current picture block at a boundary, wherein the boundary is a boundary between the current picture block and a neighboring picture block of the current picture block; and
    the performing filtering processing on the current picture block by using the target filter comprises: performing, by using the target filter, filtering processing on filtering pixels in the current picture block that neighbor to the boundary.

3. The method according to claim 2, wherein the performing, by using the target filter, filtering processing on filtering pixels in the current picture block that neighbor to the boundary comprises:

if attributes of the target filter comprise a filtering coefficient, a quantity of source filtering pixels, and a quantity of target filtering pixels, performing filtering processing on filtering pixels in the current picture block based on the filtering coefficient and filtering pixels on two sides of the boundary, wherein the filtering pixels in the current picture block neighbor to the boundary and correspond to the quantity of target filtering pixels, and the filtering pixels on the two sides of the boundary correspond to the quantity of source filtering pixels;

if attributes of the target filter comprise a filtering coefficient and a quantity of source filtering pixels, performing filtering on filtering pixels in the current picture block based on the filtering coefficient and filtering pixels on two sides of the boundary, wherein the filtering pixels in the current picture block neighbor to the boundary and correspond to a preset quantity of target filtering pixels, and the filtering pixels on the two sides of the boundary correspond to the quantity of source filtering pixels;

if attributes of the target filter comprise a filtering coefficient and a quantity of target filtering pixels, performing filtering processing on filtering pixels in the current picture block based on the filtering coefficient and filtering pixels on two sides of the boundary, wherein the filtering pixels in the current picture block neighbor to the boundary and correspond to the quantity of target filtering pixels, and the filtering pixels on the two sides of the boundary correspond to a preset quantity of source filtering pixels;

if attributes of the target filter comprise a filtering coefficient, performing filtering processing on filtering pixels in the current picture block based on the filtering coefficient and filtering pixels on two sides of the boundary, wherein the filtering pixels in the current picture block neighbor to the boundary and correspond to a preset quantity of target filtering pixels, and the filtering pixels on the two sides of the boundary correspond to a preset quantity of source filtering pixels;

if attributes of the target filter comprise a quantity of source filtering pixels and a quantity of target filtering pixels, performing filtering processing on filtering pixels in the current picture block based on a preset filtering coefficient and filtering pixels on two sides of the boundary, wherein the filtering pixels in the current picture block neighbor to the boundary and correspond to the quantity of target filtering pixels, and the filtering pixels on the two sides of the boundary correspond to the quantity of source filtering pixels;

if attributes of the target filter comprise a quantity of source filtering pixels, performing filtering processing on filtering pixels in the current picture block based on a preset filtering coefficient and filtering pixels on two sides of the boundary, wherein the pixels in the current picture block neighbor to the boundary and correspond to a preset quantity of target filtering pixels, and the filtering pixels on the two sides of the boundary correspond to the quantity of source filtering pixels; or

if attributes of the target filter comprise a quantity of target filtering pixels, performing filtering processing on filtering pixels in the current picture block based on a preset filtering coefficient and filtering pixels on two sides of the boundary, wherein the filtering pixels in the current picture block neighbor to the boundary and correspond to the quantity of target filtering pixels, and the filtering pixels on the two sides of the boundary correspond to a preset quantity of source filtering pixels.

4. The method according to claim 2 or 3, wherein the performing, by using the target filter, filtering processing on filtering pixels in the current picture block that neighbor to the boundary comprises: performing, by using the target filter, filtering processing on the filtering pixels in the current picture block that neighbor to the boundary; and performing filtering processing on filtering pixels in the neighboring picture block that neighbor to the boundary; or

the method further comprises: determining, from the filter set based on dimension information of the neighboring picture block, a second target filter used to filter the neighboring picture block at the boundary; and

the performing, by using the target filter, filtering processing on filtering pixels in the current picture block that neighbor to the boundary comprises: performing, by using the target filter, filtering processing on the filtering pixels in the current picture block that neighbor to the boundary; and performing, by using the second target filter, filtering processing on filtering pixels in the neighboring picture block that neighbor to the boundary, wherein filtering strength of the target filter is different from filtering strength of the second target filter.

5. The method according to any one of claims 2 to 4, wherein the determining, from a filter set based on the dimension information of the current picture block, the target filter used to filter the current picture block at a boundary comprises: determining, based on a correspondence between a plurality of block dimensions and a plurality of filters in the filter set, a filter corresponding to a block dimension of the current picture block, wherein the filter corresponding to the block dimension of the current picture block is the target filter used to filter the current picture block at the boundary, and the block dimension of the current picture block is the width or height of the current picture block.

**6.** The method according to any one of claims 2 to 4, wherein the determining, from a filter set based on the dimension information of the current picture block, the target filter used to filter the current picture block at a boundary comprises:

if a block dimension of the current picture block is greater than or equal to a first threshold, determining that a first filter in the filter set is the target filter used to filter the current picture block at the boundary; or
if a block dimension of the current picture block is less than the first threshold, determining that a second filter in the filter set is the target filter used to filter the current picture block at the boundary; wherein
filtering strength of the first filter is greater than filtering strength of the second filter, and the block dimension of the current picture block is the width or height of the current picture block.

**7.** The method according to any one of claims 2 to 4, wherein the determining, from a filter set based on the dimension information of the current picture block, the target filter used to filter the current picture block at a boundary comprises:

if a block dimension of the current picture block is greater than or equal to a first threshold, determining that a first filter in the filter set is the target filter used to filter the current picture block at the boundary;
if a block dimension of the current picture block is less than a second threshold, determining that a second filter in the filter set is the target filter used to filter the current picture block at the boundary; or
if a block dimension of the current picture block is less than the first threshold and greater than or equal to the second threshold, determining that a third filter in the filter set is the target filter used to filter the current picture block at the boundary; wherein
the first threshold is greater than the second threshold, filtering strength of the first filter is greater than filtering strength of the second filter, filtering strength of the third filter is less than the filtering strength of the first filter and greater than the filtering strength of the second filter, and the block dimension of the current picture block is the width or height of the current picture block.

**8.** The method according to any one of claims 2 to 4, wherein the determining, from a filter set based on the dimension information of the current picture block, the target filter used to filter the current picture block at a boundary comprises:
determining, from the filter set based on the dimension information of the current picture block and a result of predetermining filtering strength of the boundary by the picture filtering apparatus, the target filter used to filter the current picture block at the boundary.

**9.** The method according to claim 8, wherein the neighboring picture block of the current picture block comprises a first neighboring picture block and a second neighboring picture block, and the boundary comprises a first boundary between the current picture block and the first neighboring picture block and a second boundary between the current picture block and the second neighboring picture block; and
the determining, from the filter set based on the dimension information of the current picture block and a result of predetermining filtering strength of the boundary by the picture filtering apparatus, the target filter used to filter the current picture block at the boundary comprises:

determining, from the filter set based on the dimension information of the current picture block and a first result of predetermining filtering strength of the first boundary by the picture filtering apparatus, a third target filter used to filter the current picture block at the first boundary; and determining, from the filter set based on the dimension information of the current picture block and a second result of predetermining filtering strength of the second boundary by the picture filtering apparatus, a fourth target filter used to filter the current picture block at the second boundary; wherein
both the first boundary and the second boundary are vertical boundaries, and a sum of a quantity of target filtering pixels that is comprised in attributes of the third target filter and a quantity of target filtering pixels that is comprised in attributes of the fourth target filter is less than or equal to the width of the current picture block; or both the first boundary and the second boundary are horizontal boundaries, and a sum of a quantity of target filtering pixels that is comprised in attributes of the third target filter and a quantity of target filtering pixels that is comprised in attributes of the fourth target filter is less than or equal to the height of the current picture block.

**10.** The method according to claim 8 or 9, wherein the determining, from the filter set based on the dimension information of the current picture block and a result of predetermining filtering strength of the boundary by the picture filtering apparatus, the target filter used to filter the current picture block at the boundary comprises:

determining, based on a correspondence between a plurality of block dimensions and a plurality of filters in a first filter set, a filter corresponding to a block dimension of the current picture block, wherein the filter corresponding to the block dimension of the current picture block is the target filter used to filter the current picture block at the boundary, and the first filter set is a filter set that corresponds to the predetermining result of the filtering strength of the boundary in a plurality of filter sets; or

determining, based on a correspondence between a plurality of block dimensions and a plurality of filter sets, a second filter set corresponding to a block dimension of the current picture block, wherein the second filter set comprises a plurality of filters corresponding to different filtering strength; and determining, from the second filter set, a filter corresponding to the predetermining result of the filtering strength of the boundary, wherein the filter corresponding to the predetermining result of the filtering strength of the boundary is the target filter used to filter the current picture block at the boundary; wherein

the block dimension of the current picture block is the width or height of the current picture block.

11. The method according to claim 8 or 9, wherein the determining, from the filter set based on the dimension information of the current picture block and a result of predetermining filtering strength of the boundary by the picture filtering apparatus, the target filter used to filter the current picture block at the boundary comprises:

if a block dimension of the current picture block is greater than or equal to a third threshold, determining that a fourth filter in a third filter set is the target filter used to filter the current picture block at the boundary; or

if a block dimension of the current picture block is less than the third threshold, determining that a fifth filter in the third filter set is the target filter used to filter the current picture block at the boundary; wherein

filtering strength of the fourth filter is greater than filtering strength of the fifth filter, the third filter set is a filter set that corresponds to the predetermining result of the filtering strength of the boundary in a plurality of filter sets, and the block dimension of the current picture block is the width or height of the current picture block.

12. The method according to claim 8 or 9, wherein the determining, from the filter set based on the dimension information of the current picture block and a result of predetermining filtering strength of the boundary by the picture filtering apparatus, the target filter used to filter the current picture block at the boundary comprises:

if a block dimension of the current picture block is greater than or equal to a third threshold, determining that a fourth filter in a third filter set is the target filter used to filter the current picture block at the boundary;

if a block dimension of the current picture block is less than a fourth threshold, determining that a fifth filter in the third filter set is the target filter used to filter the current picture block at the boundary; or

if a block dimension of the current picture block is less than the third threshold and greater than or equal to the fourth threshold, determining that a sixth filter in the third filter set is the target filter used to filter the current picture block at the boundary; wherein

the third threshold is greater than the fourth threshold, filtering strength of the fourth filter is greater than filtering strength of the fifth filter, filtering strength of the sixth filter is less than the filtering strength of the fourth filter and greater than the filtering strength of the fifth filter, the third filter set is a filter set that corresponds to the predetermining result of the filtering strength of the boundary in a plurality of filter sets, and the block dimension of the current picture block is the width or height of the current picture block.

13. The method according to claim 8 or 9, wherein the determining, from the filter set based on the dimension information of the current picture block and a result of predetermining filtering strength of the boundary by the picture filtering apparatus, the target filter used to filter the current picture block at the boundary comprises:

if a block dimension of the current picture block is greater than or equal to a fifth threshold, determining that a filter set corresponding to the block dimension of the current picture block is a fourth filter set, wherein the fourth filter set comprises a plurality of filters corresponding to different filtering strength; and determining, from the fourth filter set, a filter corresponding to the predetermining result of the filtering strength of the boundary, wherein the filter corresponding to the predetermining result of the filtering strength of the boundary is the target filter used to filter the current picture block at the boundary; or

if a block dimension of the current picture block is less than the fifth threshold, determining that a filter set corresponding to the block dimension of the current picture block is a fifth filter set, wherein the fifth filter set comprises a plurality of filters corresponding to different filtering strength; and determining, from the fifth filter set, a filter corresponding to the predetermining result of the filtering strength of the boundary, wherein the filter corresponding to the predetermining result of the filtering strength of the boundary is the target filter used to filter the current picture block at the boundary; wherein

filtering strength of the target filter in the fourth filter set is greater than filtering strength of the target filter in the fifth filter set, and the block dimension of the current picture block is the width or height of the current picture block.

**14.** The method according to claim 8 or 9, wherein the determining, from the filter set based on the dimension information of the current picture block and a result of predetermining filtering strength of the boundary by the picture filtering apparatus, the target filter used to filter the current picture block at the boundary comprises:

if a block dimension of the to-be-filtered current picture block is greater than or equal to a fifth threshold, determining that a filter set corresponding to the block dimension of the current picture block is a fourth filter set, wherein the fourth filter set comprises a plurality of filters corresponding to different filtering strength; and determining, from the fourth filter set, a filter corresponding to the predetermining result of the filtering strength of the boundary, wherein the filter corresponding to the predetermining result of the filtering strength of the boundary is the target filter used to filter the current picture block at the boundary;
if a block dimension of the to-be-filtered current picture block is less than a sixth threshold, determining that a filter set corresponding to the block dimension of the current picture block is a fifth filter set, wherein the fifth filter set comprises a plurality of filters corresponding to different filtering strength; and determining, from the fifth filter set, a filter corresponding to the predetermining result of the filtering strength of the boundary, wherein the filter corresponding to the predetermining result of the filtering strength of the boundary is the target filter used to filter the current picture block at the boundary; or
if a block dimension of the to-be-filtered current picture block is less than the fifth threshold and greater than or equal to the sixth threshold, determining that a filter set corresponding to the block dimension of the current picture block is a sixth filter set, wherein the sixth filter set comprises a plurality of filters corresponding to different filtering strength; and determining, from the sixth filter set, a filter corresponding to the predetermining result of the filtering strength of the boundary, wherein the filter corresponding to the predetermining result of the filtering strength of the boundary is the target filter used to filter the current picture block at the boundary; wherein the fifth threshold is greater than the sixth threshold, filtering strength of the target filter in the fourth filter set is greater than filtering strength of the target filter in the fifth filter set, filtering strength of the target filter in the sixth filter set is less than the filtering strength of the target filter in the fourth filter set and greater than the filtering strength of the target filter in the fifth filter set, and the block dimension of the current picture block is the width or height of the current picture block.

**15.** The method according to any one of claims 2 to 14, wherein the neighboring picture block of the current picture block comprises a third neighboring picture block and a fourth neighboring picture block, and the boundary comprises a third boundary between the current picture block and the third neighboring picture block and a fourth boundary between the current picture block and the fourth neighboring picture block, wherein the third boundary is a vertical boundary, and the fourth boundary is a horizontal boundary; and the performing, by using the target filter, filtering processing on filtering pixels in the current picture block that neighbor to the boundary comprises:

determining, from the filter set based on the width of the current picture block through table lookup or a comparison with a threshold, a target filter used to filter the current picture block at the third boundary, wherein the width of the current picture block is greater than or equal to a preset value; and
determining, from the filter set based on the height of the current picture block through table lookup or a comparison with a threshold, a target filter used to filter the current picture block at the fourth boundary, wherein the height of the current picture block is greater than or equal to the preset value.

**16.** A picture filtering apparatus, wherein the apparatus comprises:

a filtering determining module, configured to determine, based on dimension information of a to-be-filtered current picture block, a target filter used to filter the current picture block, wherein the dimension information comprises a width or a height of the current picture block; and
a filtering processing module, configured to perform filtering processing on the current picture block by using the target filter.

**17.** The apparatus according to claim 16, wherein
the filtering determining module is specifically configured to determine, from a filter set based on the dimension information of the current picture block, the target filter used to filter the current picture block at a boundary, wherein the boundary is a boundary between the current picture block and a neighboring picture block of the current picture block; and
the filtering processing module is specifically configured to perform, by using the target filter, filtering processing on filtering pixels in the current picture block that neighbor to the boundary.

**18.** The apparatus according to claim 17, wherein the filtering processing module is specifically configured to:

if attributes of the target filter comprise a filtering coefficient, a quantity of source filtering pixels, and a quantity of target filtering pixels, perform filtering processing on filtering pixels in the current picture block based on the filtering coefficient and filtering pixels on two sides of the boundary, wherein the filtering pixels in the current picture block neighbor to the boundary and correspond to the quantity of target filtering pixels, and the filtering pixels on the two sides of the boundary correspond to the quantity of source filtering pixels;

if attributes of the target filter comprise a filtering coefficient and a quantity of source filtering pixels, perform filtering processing on filtering pixels in the current picture block based on the filtering coefficient and filtering pixels on two sides of the boundary, wherein the filtering pixels in the current picture block neighbor to the boundary and correspond to a preset quantity of target filtering pixels, and the filtering pixels on the two sides of the boundary correspond to the quantity of source filtering pixels;

if attributes of the target filter comprise a filtering coefficient and a quantity of target filtering pixels, perform filtering processing on filtering pixels in the current picture block based on the filtering coefficient and filtering pixels on two sides of the boundary, wherein the filtering pixels in the current picture block neighbor to the boundary and correspond to the quantity of target filtering pixels, and the filtering pixels on the two sides of the boundary correspond to a preset quantity of source filtering pixels;

if attributes of the target filter comprise a filtering coefficient, perform filtering processing on filtering pixels in the current picture block based on the filtering coefficient and filtering pixels on two sides of the boundary, wherein the filtering pixels in the current picture block neighbor to the boundary and correspond to a preset quantity of target filtering pixels, and the filtering pixels on the two sides of the boundary correspond to a preset quantity of source filtering pixels;

if attributes of the target filter comprise a quantity of source filtering pixels and a quantity of target filtering pixels, perform filtering processing on filtering pixels in the current picture block based on a preset filtering coefficient and filtering pixels on two sides of the boundary, wherein the filtering pixels in the current picture block neighbor to the boundary and correspond to the quantity of target filtering pixels, and the filtering pixels on the two sides of the boundary correspond to the quantity of source filtering pixels;

if attributes of the target filter comprise a quantity of source filtering pixels, perform filtering processing on filtering pixels in the current picture block based on a preset filtering coefficient and filtering pixels on two sides of the boundary, wherein the pixels in the current picture block neighbor to the boundary and correspond to a preset quantity of target filtering pixels, and the filtering pixels on the two sides of the boundary correspond to the quantity of source filtering pixels; or

if attributes of the target filter comprise a quantity of target filtering pixels, perform filtering processing on filtering pixels in the current picture block based on a preset filtering coefficient and filtering pixels on two sides of the boundary, wherein the filtering pixels in the current picture block neighbor to the boundary and correspond to the quantity of target filtering pixels, and the filtering pixels on the two sides of the boundary correspond to a preset quantity of source filtering pixels.

**19.** The apparatus according to claim 17 or 18, wherein

that the filtering processing module is specifically configured to perform filtering processing on filtering pixels in the current picture block that neighbor to the boundary comprises: performing, by using the target filter, filtering processing on the filtering pixels in the current picture block that neighbor to the boundary; and performing filtering processing on filtering pixels in the neighboring picture block that neighbor to the boundary; or

the filtering determining module is further configured to determine, from the filter set based on dimension information of the neighboring picture block, a second target filter used to filter the neighboring picture block at the boundary; and the filtering processing module is specifically configured to: perform, by using the target filter, filtering processing on the filtering pixels in the current picture block that neighbor to the boundary; and perform, by using the second target filter, filtering processing on filtering pixels in the neighboring picture block that neighbor to the boundary, wherein filtering strength of the target filter is different from filtering strength of the second target filter.

**20.** The apparatus according to any one of claims 17 to 19, wherein

the filtering determining module is specifically configured to determine, based on a correspondence between a plurality of block dimensions and a plurality of filters in the filter set, a filter corresponding to a block dimension of the current picture block, wherein the filter corresponding to the block dimension of the current picture block is the target filter used to filter the current picture block at the boundary, and the block dimension of the current picture block is the width or height of the current picture block.

**21.** The apparatus according to any one of claims 17 to 19, wherein the filtering determining module is specifically configured to:

if a block dimension of the current picture block is greater than or equal to a first threshold, determine that a first filter in the filter set is the target filter used to filter the current picture block at the boundary; or
if a block dimension of the current picture block is less than the first threshold, determine that a second filter in the filter set is the target filter used to filter the current picture block at the boundary; wherein
filtering strength of the first filter is greater than filtering strength of the second filter, and the block dimension of the current picture block is the width or height of the current picture block.

22. The apparatus according to any one of claims 17 to 19, wherein the filtering determining module is specifically configured to:

if a block dimension of the current picture block is greater than or equal to a first threshold, determine that a first filter in the filter set is the target filter used to filter the current picture block at the boundary;
if a block dimension of the current picture block is less than a second threshold, determine that a second filter in the filter set is the target filter used to filter the current picture block at the boundary; or
if a block dimension of the current picture block is less than the first threshold and greater than or equal to the second threshold, determine that a third filter in the filter set is the target filter used to filter the current picture block at the boundary; wherein
the first threshold is greater than the second threshold, filtering strength of the first filter is greater than filtering strength of the second filter, filtering strength of the third filter is less than the filtering strength of the first filter and greater than the filtering strength of the second filter, and the block dimension of the current picture block is the width or height of the current picture block.

23. The apparatus according to any one of claims 17 to 19, wherein
the filtering determining module is specifically configured to determine, from the filter set based on the dimension information of the current picture block and a result of predetermining filtering strength of the boundary by the picture filtering apparatus, the target filter used to filter the current picture block at the boundary.

24. The apparatus according to claim 23, wherein the neighboring picture block of the current picture block comprises a first neighboring picture block and a second neighboring picture block, and the boundary comprises a first boundary between the current picture block and the first neighboring picture block and a second boundary between the current picture block and the second neighboring picture block; and
the filtering determining module is specifically configured to: determine, from the filter set based on the dimension information of the current picture block and a first result of predetermining filtering strength of the first boundary by the picture filtering apparatus, a third target filter used to filter the current picture block at the first boundary; and determine, from the filter set based on the dimension information of the current picture block and a second result of predetermining filtering strength of the second boundary by the picture filtering apparatus, a fourth target filter used to filter the current picture block at the second boundary; wherein
both the first boundary and the second boundary are vertical boundaries, and a sum of a quantity of target filtering pixels that is comprised in attributes of the third target filter and a quantity of target filtering pixels that is comprised in attributes of the fourth target filter is less than or equal to the width of the current picture block; or both the first boundary and the second boundary are horizontal boundaries, and a sum of a quantity of target filtering pixels that is comprised in attributes of the third target filter and a quantity of target filtering pixels that is comprised in attributes of the fourth target filter is less than or equal to the height of the current picture block.

25. The apparatus according to claim 23 or 24, wherein the filtering determining module is specifically configured to:

determine, based on a correspondence between a plurality of block dimensions and a plurality of filters in a first filter set, a filter corresponding to a block dimension of the current picture block, wherein the filter corresponding to the block dimension of the current picture block is the target filter used to filter the current picture block at the boundary, and the first filter set is a filter set that corresponds to the predetermining result of the filtering strength of the boundary in a plurality of filter sets; or
determine, based on a correspondence between a plurality of block dimensions and a plurality of filter sets, a second filter set corresponding to a block dimension of the current picture block, wherein the second filter set comprises a plurality of filters corresponding to different filtering strength; and determine, from the second filter set, a filter corresponding to the predetermining result of the filtering strength of the boundary, wherein the filter corresponding to the predetermining result of the filtering strength of the boundary is the target filter used to filter the current picture block at the boundary; wherein
the block dimension of the current picture block is the width or height of the current picture block.

26. The apparatus according to claim 23 or 24, wherein the filtering determining module is specifically configured to:

if a block dimension of the current picture block is greater than or equal to a third threshold, determine that a fourth filter in a third filter set is the target filter used to filter the current picture block at the boundary; and
if a block dimension of the current picture block is less than the third threshold, determine that a fifth filter in the third filter set is the target filter used to filter the current picture block at the boundary; wherein
filtering strength of the fourth filter is greater than filtering strength of the fifth filter, the third filter set is a filter set that corresponds to the predetermining result of the filtering strength of the boundary in a plurality of filter sets, and the block dimension of the current picture block is the width or height of the current picture block.

27. The apparatus according to claim 23 or 24, wherein the filtering determining module is specifically configured to:

if a block dimension of the current picture block is greater than or equal to a third threshold, determine that a fourth filter in a third filter set is the target filter used to filter the current picture block at the boundary;
if a block dimension of the current picture block is less than a fourth threshold, determine that a fifth filter in the third filter set is the target filter used to filter the current picture block at the boundary; or
if a block dimension of the current picture block is less than the third threshold and greater than or equal to the fourth threshold, determine that a sixth filter in the third filter set is the target filter used to filter the current picture block at the boundary; wherein
the third threshold is greater than the fourth threshold, filtering strength of the fourth filter is greater than filtering strength of the fifth filter, filtering strength of the sixth filter is less than the filtering strength of the fourth filter and greater than the filtering strength of the fifth filter, the third filter set is a filter set that corresponds to the predetermining result of the filtering strength of the boundary in a plurality of filter sets, and the block dimension of the current picture block is the width or height of the current picture block.

28. The apparatus according to claim 23 or 24, wherein the filtering determining module is specifically configured to:

if a block dimension of the current picture block is greater than or equal to a fifth threshold, determine that a filter set corresponding to the block dimension of the current picture block is a fourth filter set, wherein the fourth filter set comprises a plurality of filters corresponding to different filtering strength; and determine, from the fourth filter set, a filter corresponding to the predetermining result of the filtering strength of the boundary, wherein the filter corresponding to the predetermining result of the filtering strength of the boundary is the target filter used to filter the current picture block at the boundary; or
if a block dimension of the current picture block is less than the fifth threshold, determine that a filter set corresponding to the block dimension of the current picture block is a fifth filter set, wherein the fifth filter set comprises a plurality of filters corresponding to different filtering strength; and determine, from the fifth filter set, a filter corresponding to the predetermining result of the filtering strength of the boundary, wherein the filter corresponding to the predetermining result of the filtering strength of the boundary is the target filter used to filter the current picture block at the boundary; wherein
filtering strength of the target filter in the fourth filter set is greater than filtering strength of the target filter in the fifth filter set, and the block dimension of the current picture block is the width or height of the current picture block.

29. The apparatus according to claim 23 or 24, wherein the filtering determining module is specifically configured to:

if a block dimension of the to-be-filtered current picture block is greater than or equal to a fifth threshold, determine that a filter set corresponding to the block dimension of the current picture block is a fourth filter set, wherein the fourth filter set comprises a plurality of filters corresponding to different filtering strength; and determine, from the fourth filter set, a filter corresponding to the predetermining result of the filtering strength of the boundary, wherein the filter corresponding to the predetermining result of the filtering strength of the boundary is the target filter used to filter the current picture block at the boundary;
if a block dimension of the to-be-filtered current picture block is less than a sixth threshold, determine that a filter set corresponding to the block dimension of the current picture block is a fifth filter set, wherein the fifth filter set comprises a plurality of filters corresponding to different filtering strength; and determine, from the fifth filter set, a filter corresponding to the predetermining result of the filtering strength of the boundary, wherein the filter corresponding to the predetermining result of the filtering strength of the boundary is the target filter used to filter the current picture block at the boundary; or

if a block dimension of the to-be-filtered current picture block is less than the fifth threshold and greater than or equal to the sixth threshold, determine that a filter set corresponding to the block dimension of the current picture block is a sixth filter set, wherein the sixth filter set comprises a plurality of filters corresponding to different filtering strength; and determine, from the sixth filter set, a filter corresponding to the predetermining result of the filtering strength of the boundary, wherein the filter corresponding to the predetermining result of the filtering strength of the boundary is the target filter used to filter the current picture block at the boundary; wherein the fifth threshold is greater than the sixth threshold, filtering strength of the target filter in the fourth filter set is greater than filtering strength of the target filter in the fifth filter set, filtering strength of the target filter in the sixth filter set is less than the filtering strength of the target filter in the fourth filter set and greater than the filtering strength of the target filter in the fifth filter set, and the block dimension of the current picture block is the width or height of the current picture block.

30. The apparatus according to any one of claims 17 to 29, wherein the neighboring picture block of the current picture block comprises a third neighboring picture block and a fourth neighboring picture block, and the boundary comprises a third boundary between the current picture block and the third neighboring picture block and a fourth boundary between the current picture block and the fourth neighboring picture block, wherein the third boundary is a vertical boundary, and the fourth boundary is a horizontal boundary; and the determining, based on dimension information of a to-be-filtered current picture block, a target filter used to filter the current picture block comprises:

determining, from the filter set based on the width of the current picture block through table lookup or a comparison with a threshold, a target filter used to filter the current picture block at the third boundary, wherein the width of the current picture block is greater than or equal to a preset value; and

determining, from the filter set based on the height of the current picture block through table lookup or a comparison with a threshold, a target filter used to filter the current picture block at the fourth boundary, wherein the height of the current picture block is greater than or equal to the preset value.

31. A picture filtering method, comprising:

if a block dimension of a current picture block is greater than or equal to a first threshold, determining that a first filter is a target filter used to filter the current picture block at a boundary, wherein the boundary is a boundary between the current picture block and a neighboring picture block of the current picture block; or

if a block dimension of the current picture block is less than the first threshold, determining that a second filter is a target filter used to filter the current picture block at the boundary, wherein filtering strength of the first filter is greater than filtering strength of the second filter, and the block dimension of the current picture block is a width or a height of the current picture block; and

performing, by using the target filter, filtering processing on filtering pixels in the current picture block that neighbor to the boundary.

32. The method according to claim 31, wherein the first threshold is $2^n$, and $2 \leq n \leq 8$.

33. A picture filtering apparatus, comprising:
a filtering determining module, configured to:

if a block dimension of a current picture block is greater than or equal to a first threshold, determine that a first filter is a target filter used to filter the current picture block at a boundary, wherein the boundary is a boundary between the current picture block and a neighboring picture block of the current picture block; or

if a block dimension of the current picture block is less than the first threshold, determine that a second filter is a target filter used to filter the current picture block at the boundary, wherein filtering strength of the first filter is greater than filtering strength of the second filter, and the block dimension of the current picture block is a width or a height of the current picture block; and

a filtering processing module, configured to perform filtering processing on the current picture block by using the target filter.

34. The apparatus according to claim 33, wherein the first threshold is $2^n$, and $2 \leq n \leq 8$.

35. A video encoder, wherein the video encoder comprises a reconstructor, a loop filter, and an entropy encoder, wherein the reconstructor is configured to: reconstruct a current encoding picture block, and output a reconstructed current picture block to the filter;

the loop filter comprises the picture filtering apparatus according to any one of claims 16 to 30 or claim 33 or 34, wherein the filter is configured to: determine, based on dimension information of the to-be-filtered reconstructed current picture block, a target filter used to filter the reconstructed current picture block; and perform filtering processing on the reconstructed current picture block by using the target filter, wherein the dimension information comprises a width or a height of the reconstructed current picture block; and

the entropy encoder is configured to encode an identifier into a stream, wherein the identifier is used to indicate whether to filter the current picture block based on the dimension information of the current picture block.

36. A video decoder, wherein the video decoder comprises an entropy decoder, a reconstructor, and a loop filter, wherein the entropy decoder is configured to parse a stream to obtain an identifier, wherein the identifier is used to indicate whether to filter a to-be-filtered reconstructed current picture block based on dimension information of the current picture block, and the dimension information comprises a width or a height of the current picture block;

the reconstructor is configured to: reconstruct a current decoding picture block, and output the reconstructed current picture block to the filter; and

the loop filter comprises the picture filtering apparatus according to any one of claims 16 to 30 or claim 33 or 34, wherein the filter is configured to: determine, based on the dimension information of the reconstructed current picture block, a target filter used to filter the reconstructed current picture block; and perform filtering processing on the reconstructed current picture block by using the target filter.

37. A picture filtering apparatus, wherein the apparatus comprises a memory and a processor, wherein the memory is configured to store program code, and the processor is configured to invoke the program code to perform the picture filtering method according to any one of claims 1 to 15 or claim 31 or 32.

38. A computer readable storage medium, comprising program code, wherein when the program code is run on a computer, the picture filtering method according to any one of claims 1 to 15 or claim 31 or 32 is performed.

FIG. 1

FIG. 2

Filtered pixel based on a vertical boundary 1

Filtered pixel based on a vertical boundary 2

Vertical boundary 1

Vertical boundary 2

Pixel

FIG. 3

Source apparatus 10

Video source
120

Video encoder
100

Output interface
140

Storage apparatus
40

30

Destination apparatus 20

Display apparatus
220

Video decoder
200

Input interface
240

FIG. 4

Encode a syntax element related to a to-be-filtered current picture block into a stream, where the syntax element related to the current picture block may include picture filtering data, and the picture filtering data includes an identifier used to indicate whether to perform filtering processing based on dimension information of the current picture block

S501

If the identifier is used to indicate to perform filtering processing on the current picture block based on the dimension information of the current picture block, perform filtering processing on the current picture block based on the dimension information of the current picture block

S503

FIG. 5

Decode a stream to obtain a syntax element related to a to-be-filtered current picture block (that is, picture filtering data), where the picture filtering data includes an identifier used to indicate whether to perform filtering processing on the current picture block based on dimension information of the current picture block

S601

If the identifier is used to indicate to perform filtering processing on the current picture block based on the dimension information of the current picture block, perform filtering processing on the current picture block based on the dimension information of the current picture block

S603

FIG. 6

FIG. 7A

FIG. 7B

S801. Determine, based on dimension information of a to-be-filtered current picture block, a target filter used to filter the current picture block, where the dimension information includes the width or height of the current picture block

S801

Perform filtering processing on the current picture block by using the target filter

S803

FIG. 8

← Width →

Vertical boundary

Current picture block

Vertical boundary

Horizontal boundary

Current picture block

Height

Horizontal boundary

(a)

(b)

FIG. 9

Determine, from a filter set based on dimension information of a current picture block, a target filter used to filter the current picture block at a boundary — S901-A

Perform filtering processing on filtering pixels in the current picture block on a side of the boundary by using the target filter — S903

FIG. 10A

Determine, from a filter set based on dimension information of a current picture block and a result of predetermining filtering strength of a boundary by a picture filtering apparatus, a target filter used to filter the current picture block at the boundary — S901-B

Perform filtering processing on filtering pixels in the current picture block on a side of the boundary by using the target filter — S903

FIG. 10B

Determine, from a plurality of filter sets,
a filter set corresponding to a
predetermining result of filtering strength
of a boundary, where each filter set
corresponds to one predetermining result
of the filtering strength

T1

Determine whether
a block dimension of a current picture
block is greater than or equal to a third
threshold

T2

Yes

No

T4

Determine that a fifth filter in a
third filter set is a target filter
used to filter the current picture
block at the boundary

T3

Determine that a fourth filter in a
third filter set is a target filter
used to filter the current picture
block at the boundary

FIG. 11

M1

Determine whether
a block dimension of a current picture
block is greater than or equal to a fifth
threshold

No

Yes

M2

Determine that a filter set
corresponding to the block
dimension of the current picture
block is a fourth filter set

M4

Determine that a filter set
corresponding to the block
dimension of the current picture
block is a fifth filter set

M3

Determine, from the fourth filter
set, a filter corresponding to a
predetermining result of filtering
strength of the boundary

M5

Determine, from the fifth filter
set, a filter corresponding to a
predetermining result of filtering
strength of the boundary

FIG. 12

First vertical
boundary

Second vertical
boundary

Dashed-line
box 1

Dashed-line
box 2

Picture
block 1

Picture
block 2

Picture
block 3

FIG. 13

Filtering determining module
1101

Filtering processing module
1103

Picture filtering apparatus
1100

FIG. 14

1200

Processor 1210

Display 1270

1250

Data 1231

Application: 1 ...

Application: video coding 1235

Application: N ...

Operating system 1233

1230

Memory

FIG. 15

## INTERNATIONAL SEARCH REPORT

| | International application No. |
|---|---|
| | **PCT/CN2019/078559** |

**A.    CLASSIFICATION OF SUBJECT MATTER**

H04N 19/117(2014.01)i;  H04N 19/82(2014.01)i

According to International Patent Classification (IPC) or to both national classification and IPC

**B.    FIELDS SEARCHED**

Minimum documentation searched (classification system followed by classification symbols)

    H04N

Documentation searched other than minimum documentation to the extent that such documents are included in the fields searched

Electronic data base consulted during the international search (name of data base and, where practicable, search terms used)

    CNABS, CNTXT, CNKI, VEN, USTXT: 图像, 块, 尺寸, 大小, 长, 宽, 滤波器, 确定, 选择, 大于, 阈值, 采样, +block+, filter?, border, edge, sampling+, size, hight, weight

**C.    DOCUMENTS CONSIDERED TO BE RELEVANT**

| Category* | Citation of document, with indication, where appropriate, of the relevant passages | Relevant to claim No. |
|---|---|---|
| X | CN 103141106 A (MITSUBISHI ELECTRIC CORPORATION) 05 June 2013 (2013-06-05) description, paragraphs [0036]-[0221], and figures 1 and 2 | 1-9, 16-24, 31-38 |
| X | CN 103299637 A (MITSUBISHI ELECTRIC CORPORATION) 11 September 2013 (2013-09-11) description, paragraphs [0069]-[0313], and figures 1 and 2 | 1-9, 16-24, 31-38 |
| A | CN 1666429 A (NOKIA CORPORATION) 07 September 2005 (2005-09-07) entire document | 1-38 |
| A | WO 2017208549 A1 (SONY CORPORATION) 07 December 2017 (2017-12-07) entire document | 1-38 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2019** | **24 May 2019** |

| Name and mailing address of the ISA/CN | Authorized officer |
|---|---|
| **National Intellectual Property Administration, PRC (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2019/078559** |

| Patent document cited in search report | | | Publication date (day/month/year) | Patent family member(s) | | | Publication date (day/month/year) |
|---|---|---|---|---|---|---|---|
| CN | 103141106 | A | 05 June 2013 | CN | 103141106 | B | 16 March 2016 |
| | | | | TW | I566588 | B | 11 January 2017 |
| | | | | CA | 3000366 | A1 | 05 April 2012 |
| | | | | RU | 2015102755 | A | 10 June 2015 |
| | | | | JP | WO2012042720 | A1 | 03 February 2014 |
| | | | | TW | 201515447 | A | 16 April 2015 |
| | | | | KR | 20140102324 | A | 21 August 2014 |
| | | | | EP | 2624563 | A1 | 07 August 2013 |
| | | | | TW | 201223288 | A | 01 June 2012 |
| | | | | CN | 105516722 | B | 07 December 2018 |
| | | | | CN | 105744274 | A | 06 July 2016 |
| | | | | JP | 6005087 | B2 | 12 October 2016 |
| | | | | MX | 2013003696 | A | 20 May 2013 |
| | | | | US | 2015245023 | A1 | 27 August 2015 |
| | | | | TW | I606721 | B | 21 November 2017 |
| | | | | CN | 105516722 | A | 20 April 2016 |
| | | | | TW | 201639372 | A | 01 November 2016 |
| | | | | JP | 2014123988 | A | 03 July 2014 |
| | | | | US | 10244233 | B2 | 26 March 2019 |
| | | | | US | 2015245022 | A1 | 27 August 2015 |
| | | | | RU | 2642356 | C1 | 24 January 2018 |
| | | | | TW | 201640899 | A | 16 November 2016 |
| | | | | RU | 2674306 | C1 | 06 December 2018 |
| | | | | CN | 105744274 | B | 01 February 2019 |
| | | | | EP | 2624563 | A4 | 16 March 2016 |
| | | | | US | 10237551 | B2 | 19 March 2019 |
| | | | | JP | 2018117379 | A | 26 July 2018 |
| | | | | HK | 1219594 | A1 | 07 April 2017 |
| | | | | US | 10244264 | B2 | 26 March 2019 |
| | | | | RU | 2608674 | C2 | 23 January 2017 |
| | | | | KR | 20140106742 | A | 03 September 2014 |
| | | | | US | 10237550 | B2 | 19 March 2019 |
| | | | | KR | 20130101070 | A | 12 September 2013 |
| | | | | SG | 189076 | A1 | 31 May 2013 |
| | | | | BR | 112013006501 | A2 | 12 July 2016 |
| | | | | HK | 1219593 | A1 | 07 April 2017 |
| | | | | KR | 20140102325 | A | 21 August 2014 |
| | | | | WO | 2012042720 | A1 | 05 April 2012 |
| | | | | TW | I603612 | B | 21 October 2017 |
| | | | | TW | I472229 | B | 01 February 2015 |
| | | | | KR | 101578318 | B1 | 16 December 2015 |
| | | | | JP | 5503747 | B2 | 28 May 2014 |
| | | | | MX | 338462 | B | 15 April 2016 |
| | | | | JP | 2017017736 | A | 19 January 2017 |
| | | | | CN | 105516723 | B | 27 July 2018 |
| | | | | US | 2015172724 | A1 | 18 June 2015 |
| | | | | KR | 101580021 | B1 | 23 December 2015 |
| | | | | CN | 105516723 | A | 20 April 2016 |
| | | | | KR | 101669388 | B1 | 25 October 2016 |
| | | | | KR | 101563833 | B1 | 27 October 2015 |

Form PCT/ISA/210 (patent family annex) (January 2015)

**INTERNATIONAL SEARCH REPORT**
Information on patent family members

International application No.

**PCT/CN2019/078559**

| Patent document cited in search report | | | Publication date (day/month/year) | Patent family member(s) | | | Publication date (day/month/year) |
|---|---|---|---|---|---|---|---|
| CN | 103299637 | A | 11 September 2013 | TW | I579803 | B | 21 April 2017 |
| | | | | TW | I529664 | B | 11 April 2016 |
| | | | | CA | 3017317 | A1 | 19 July 2012 |
| | | | | KR | 20150029001 | A | 17 March 2015 |
| | | | | JP | 2017077036 | A | 20 April 2017 |
| | | | | JP | 2017118571 | A | 29 June 2017 |
| | | | | JP | 6091583 | B2 | 08 March 2017 |
| | | | | JP | 2016042732 | A | 31 March 2016 |
| | | | | US | 9414073 | B2 | 09 August 2016 |
| | | | | RU | 2013137436 | A | 20 February 2015 |
| | | | | JP | 2015084573 | A | 30 April 2015 |
| | | | | JP | 5674972 | B2 | 25 February 2015 |
| | | | | CN | 105872565 | A | 17 August 2016 |
| | | | | JP | 6091584 | B2 | 08 March 2017 |
| | | | | KR | 20160038081 | A | 06 April 2016 |
| | | | | RU | 2565038 | C2 | 10 October 2015 |
| | | | | US | 2013287312 | A1 | 31 October 2013 |
| | | | | CN | 105872565 | B | 08 March 2019 |
| | | | | CA | 2979455 | C | 04 September 2018 |
| | | | | HK | 1224114 | A1 | 11 August 2017 |
| | | | | WO | 2012096150 | A1 | 19 July 2012 |
| | | | | KR | 20160087925 | A | 22 July 2016 |
| | | | | JP | 5840285 | B2 | 06 January 2016 |
| | | | | CA | 2979455 | A1 | 19 July 2012 |
| | | | | HK | 1224113 | A1 | 11 August 2017 |
| | | | | RU | 2648578 | C1 | 26 March 2018 |
| | | | | TW | 201624420 | A | 01 July 2016 |
| | | | | JP | 2014132766 | A | 17 July 2014 |
| | | | | CA | 2823503 | C | 19 March 2019 |
| | | | | TW | I620150 | B | 01 April 2018 |
| | | | | US | 9628797 | B2 | 18 April 2017 |
| | | | | HK | 1224112 | A1 | 11 August 2017 |
| | | | | US | 2016112706 | A1 | 21 April 2016 |
| | | | | US | 10205944 | B2 | 12 February 2019 |
| | | | | CA | 3000998 | A1 | 19 July 2012 |
| | | | | RU | 2654153 | C1 | 16 May 2018 |
| | | | | KR | 101547041 | B1 | 24 August 2015 |
| | | | | KR | 101604959 | B1 | 18 March 2016 |
| | | | | CN | 103299637 | B | 29 June 2016 |
| | | | | CA | 3000998 | C | 30 October 2018 |
| | | | | CN | 105959706 | A | 21 September 2016 |
| | | | | TW | 201820269 | A | 01 June 2018 |
| | | | | KR | 101678351 | B1 | 21 November 2016 |
| | | | | KR | 101609490 | B1 | 05 April 2016 |
| | | | | CA | 2961824 | A1 | 19 July 2012 |
| | | | | RU | 2648575 | C1 | 26 March 2018 |
| | | | | KR | 20160038082 | A | 06 April 2016 |
| | | | | JP | 2017118572 | A | 29 June 2017 |
| | | | | KR | 20140074397 | A | 17 June 2014 |
| CN | 1666429 | A | 07 September 2005 | EP | 1530829 | A2 | 18 May 2005 |

Form PCT/ISA/210 (patent family annex) (January 2015)

**INTERNATIONAL SEARCH REPORT**
Information on patent family members

International application No.

**PCT/CN2019/078559**

| Patent document cited in search report | | Publication date (day/month/year) | Patent family member(s) | | | Publication date (day/month/year) |
|---|---|---|---|---|---|---|
| | | | UA | 90993 | C2 | 25 June 2010 |
| | | | US | 7349473 | B2 | 25 March 2008 |
| | | | EP | 1530829 | A4 | 31 August 2005 |
| | | | HK | 1081012 | A1 | 08 May 2009 |
| | | | JP | 2005532725 | A | 27 October 2005 |
| | | | CN | 100452668 | C | 14 January 2009 |
| | | | AU | 2003246987 | A8 | 23 January 2004 |
| | | | WO | 2004006558 | A2 | 15 January 2004 |
| | | | ZA | 200410403 | B | 30 November 2005 |
| | | | EP | 1530829 | B1 | 22 August 2018 |
| | | | WO | 2004006558 | A3 | 18 March 2004 |
| | | | ZA | 200410403 | A | 02 September 2005 |
| | | | CA | 2491679 | A1 | 15 January 2004 |
| | | | US | 2004062307 | A1 | 01 April 2004 |
| | | | AU | 2003246987 | A1 | 23 January 2004 |
| | | | MX | PA05000335 | A | 31 March 2005 |
| WO | 2017208549 A1 | 07 December 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810226373